# EUROPÄISCHE PATENTANMELDUNG

(11) **EP 4 431 923 A1**
(43) Veröffentlichungstag der Anmeldung: **18.09.2024**
(21) Anmeldenummer: 24160861.1
(22) Anmeldetag: 01.03.2024
(51) Int. Cl.: G01N 21/90, B67B 3/26

(54) **VERFAHREN UND INSPEKTIONSVORRICHTUNG ZUM INSPIZIEREN VON MIT VERSCHLÜSSEN VERSEHENEN BEHÄLTNISSEN SOWIE VERFAHREN UND VERSCHLIESSVORRICHTUNG ZUM VERSCHLIESSEN VON BEHÄLTNISSEN**

(30) Priorität: 15.03.2023 DE 102023106509
(71) Anmelder: Krones AG, 93073 Neutraubling (DE)
(72) Erfinder: Niedermeier, Anton, 93073 Neutraubling (DE); Bock, Thomas, 93073 Neutraubling (DE); Poeschl, Stefan, 93073 Neutraubling (DE)
(74) Vertreter: Bittner, Bernhard

(57) **Zusammenfassung**

Verfahren zum Inspizieren von mit Verschlüssen (15) versehenen Behältnissen (10) zur Überprüfung einer Dichtfunktion zwischen dem Verschluss und einem damit versehenen Behältnis (10), wobei der Verschluss (15) durch Anordnen in Verschließrichtung (V) an einem Mündungsbereich des Behältnisses (10) angeordnet ist, wobei die Behältnisse (10) mittels einer Transporteinrichtung (2) entlang eines vorgegebenen Transportpfads transportiert werden und während dieses Transports die mit den Verschlüssen (15) versehenen Behältnisse von einer Beleuchtungseinrichtung (6) wenigstens bereichsweise beleuchtet werden und wenigstens eine Bildaufnahmeeinrichtung (4) wenigstens ein ortsaufgelöstes Bild des zu inspizierenden, mit dem Verschluss (10a) versehenen Behältnisses (10) aufnimmt. Erfindungsgemäß wird zur Überprüfung der Dichtfunktion von der wenigstens einen Bildaufnahmeeinrichtung (4) das wenigstens eine ortsaufgelöste Bild derart aufgenommen, dass hierdurch eine in Verschließrichtung (V) betrachtete Relativposition des Verschlusses (15) gegenüber dem damit versehenen Behältnis (10) abgebildet wird, und eine Bildauswerteeinrichtung auf Grundlage der in dem wenigstens einen ortsaufgelösten Bild abgebildeten Relativposition wenigstens eine für eine Erfüllung der Dichtfunktion charakteristische Dichtheitsgröße ermittelt.

## Beschreibung

Die vorliegende Erfindung bezieht sich auf ein Verfahren sowie eine Inspektionsvorrichtung zum Inspizieren von mit Verschlüssen versehenen Behältnissen zur Überprüfung einer Dichtfunktion zwischen dem Verschluss und einem damit versehenen Behältnis.

Inspektionsvorrichtungen, Verschließvorrichtungen und Verfahren zum Verschließen von Behältnissen und zum Inspizieren von mit Verschlüssen versehenen Behältnissen sind aus dem Stand der Technik seit langem bekannt.

Aus dem Stand der Technik sind Einweg PET Behälter und deren (Schraub-)Verschlüsse bekannt, welche eindeutige Markierungen besitzen. Die Markierung ist in einem festen Bezug zur Gewindeorientierung. Ist der Verschluss korrekt appliziert, müssen die beiden Markierungen in einem bestimmten Winkel zueinander (gegenüber der Behälterachse) oder in einer anders gearteten Beziehung stehen. Fertigungs- und Applizierungstoleranzen werden über den zulässigen, tolerierten Abstand der beiden Marken festgelegt. Solange die Verschluss- und Behältermarken innerhalb derer sind, ist gewährleistet, dass das Dichtungskonzept (Verschluss - Mundstück) korrekt arbeitet.

Üblich sind am Verschluss Markierung(en), die eine feste Beziehung zur Phasenlage des Gewindegangs im Verschlussstück besitzen und visuell möglichst unauffällig angebracht sind. Beispielhaft ist ein Steg des Rändel Bereichs etwas gekürzt.

Üblich sind am Behälter Tragering Markierung(en) oder im Halsbereich unterhalb des Rings, die eine feste Beziehung zur Phasenlage des Gewindegangs am Mundstück aufweisen.

Die bis dato üblichen Verschlüsse waren in der Regel ohne Logo, Prägung auf dem Deckel und wenn sie derartige Merkmale aufwiesen, ist nicht gesichert, dass diese eine Phasenbeziehung zum Gewindegang im Mundstück hatten.

Aus der DE 10 2017 119 074 B4 ist ein Verfahren zur Fehleranalyse eines Drehverschlusses eines Behälters aus PET bekannt, in welchem eine erste Markierung an der Verschlusskappe und eine zweite Markierung an dem Behälter von einer Erfassungseinheit optisch erfasst werden, wobei eine Beleuchtungseinrichtung während der Aufnahme des ersten Bildes zur relativen Aufhellung des PETs des Behälters mittels Fluoreszenz UV-Licht auf den Behälter projiziert wird. Mittels einer Verarbeitungsvorrichtung wird aus den Bildern ein relativer Winkelabstand der Markierungen bezogen auf die Drehachse bestimmt. Die Bilder werden dabei von oben aufgenommen, d.h. die optische Achse der Kameras der Erfassungseinrichtungen verlaufen zur Aufnahme in Richtung der Längsachse des Behältnisses.

Aus der WO 2014/023580 ist ein System und ein Verfahren zu Inspektion von Dichtungen bei mit einem Gewinde an einem Behältnis angebrachten Verschlüssen bekannt. Sowohl der Tragring des Behältnisses als auch der Verschluss weisen eine Markierung auf, welche von derselben Kamera detektiert werden.

Aus der WO 2019/025956 A1 ist ein Verfahren zum Detektieren der Drehposition eines Verschlusses in Bezug auf eine Flasche, auf welche dieser Verschluss angebracht ist, bekannt. Hierzu ist eine erste Markierung auf der Oberfläche des Verschlusses und eine zweite Markierung auf der Oberfläche der Flasche vorgesehen. Dabei wird jeweils anfangs ein Bild der Markierung und nach einem Entfernen flüssiger Tropfen jeweils ein weiteres Bild der jeweiligen Markierungen aufgenommen, welche jeweils miteinander verglichen werden.

Nachteilig im Stand der Technik bei den Verschlüssen ist, dass das Verschlussdrehwinkel-Merkmal schwer zu erkennen ist. Hierzu gibt es im Stand der Technik viele Ansätze, aber keiner ist in der Praxis einfach zu handhaben. Eine echte 100% und 100%ig zuverlässige Inlineinspektion ist nicht gegeben.

Meist wird von Menschenhand eine Offlineüberprüfung an einer Probemenge im Labor nachträglich vorgenommen.

Nachteilig im Stand der Technik bei den Behältern ist, dass die Behältermarkierung von oben sichtbar sein muss, damit sie bestenfalls gleichzeitig mit der Verschlussmarkierung erfasst werden kann. Das gilt bei Offline- wie Inlinekontrollen.

Weiter nachteilig am Stand der Technik ist, dass es bei den In Verkehr Bringern, dem Abfüller der Behältnisse, einen Interessenkonflikt gibt. Auf der einen Seite ist die Relativmessung der beiden Markierungen bei 100% der produzierten Behälter gewünscht, andererseits sollten für den Konsumenten der Behälter beide Markierungen so unscheinbar wie möglich platziert sein.

Nachteilig am Stand der Technik ist, die am Tragering aufgebrachte Behältermarkierung. Denn zugunsten der Kunststoffeinsparung aus Ressourcen- und Umweltgründen wird der Tragering oft sehr schwach, schmal und nach Möglichkeit mit geringem Durchmesser ausgebildet. Oft ist der Trageringdurchmesser identisch mit dem Verschlussdurchmesser. Aber der Tragering müsste über den Verschluss deutlich hinausragen, damit die Markierung von oben oder schräg von oben zusammen mit der Verschlussmarkierung erfasst werden könnte.

Mittlerweile gibt es eine neue Gattung an Verschlüssen, die sog. Tethered Caps (Verschlüsse, die nach dem Öffnen mit dem Behältnis fest verbunden bleiben). Diese haben gemein, in irgendeiner Form eine Art Lasso Funktion mitzubringen. Diese Funktion bewirkt, dass der Verschluss über das Lasso, insbesondere mit dem Sicherungsring auf dem Behälter, auch nach dem Öffnen, mit dem Behälter verbunden bleibt.

Beispielhaft sei eine Verschluss- und Mundstückkombination im Winkelbereich 740-840 korrekt appliziert. Der Winkel wird von der Einfädelposition an, dem Gewinde Anfang am Mundstück, gemessen.

Der Verschließprozess kann in vielfacher Weise zusätzliches Wasser benötigen, zwei Beispiele: Einmal, um die Friktion zu verringern. Hier wird das Gewinde des Mundstücks mit Wasser befeuchtet. Der Aufschraubevorgang wird dadurch erleichtert. Ein weiteres Mal wird der verschlossene Behälter im Mündungsbereich nach dem Verschließen mit Wasser abgeschwallt, um zuckerhaltige Produktreste des auszuspülen. Ohne dies würde im Bereich zwischen Mundstück und Verschluss mit der Zeit Schimmel entstehen.

Aus dem Stand der Technik bekannte Verschließvorrichtungen zum Verschließen der Behältnisse bringen die Verschlüsse auf die Behältnisse auf. Die Verschließvorrichtungen weisen oftmals mehrere Verschließeinheiten auf, welche (kontinuierlich) Verschlüsse auf ein Mundstück bzw. einen Mündungsbereich des Behältnisses aufbringen.

Nachteilig am Stand der Technik ist, dass immer zusätzliches Wasser im Verschlussbereich aufgetragen wird. Diese setzt sich unmittelbar nach dem Verschließen in Tropfenform auf dem Tragering nieder und überdeckt die dortige Markierung. Oder Wassertropfen werden als Pseudomarkierungen erkannt und fehlinterpretiert.

Nachteilig am Stand der Technik ist, dass die Wassertropfen restlos entfernt werden müssten. Technisch und energetisch ein hoher Aufwand, z.B. durch eine Abblasvorrichtung. Nachteilig am Stand der Technik ist die eingeschränkte Anwendbarkeit in der Praxis als Inlinequalitätsmessung.

Nachteilig am Stand der Technik ist bei mehrteiligen Gewinden, dass es z.B. 3 Einfädelpositionen beim 3-teiligen Gewinde gibt und somit es im verschlossenen Zustand drei unterschiedliche Relativpositionen mit dem Raster 0° / 120° / 240°. Die Eindeutigkeit, bzw. die Messsicherheit schrumpft.

Nachteilig am Stand der Technik ist die manuelle Überprüfung der Ergebnisse im Labor. Dies führt zu einem nachteiligen Zeitversatz zwischen einem Fehlverhalten und einem möglichen Eingreifen.

Innerhalb einer Verschlussform ist die Verschließfunktion von Zeit zu Zeit zu überprüfen. In der Regel werden in festen zeitlichen Intervallen oder nach einer bestimmten Produktionsmenge im Labor der verschlossene Behälter auf Korrektheit geprüft. Wird das Ergebnis beanstandet, muss der Verschließkopf nachjustiert werden.

Nachteilig ist die derzeitige Nachjustage vergleichsweise zeitintensiv. Weiter für den Bediener nachteilig ist das Erfordernis von regelmäßigen Wartungen der Verschließvorrichtung.

Verschlüsse mit der gleichen Form aber unterschiedlichen Farben haben unterschiedliche Reibbeiwerte. Dabei ist das Grundmaterial des Verschlusses das gleiche, so dass der Farbbeigabe und anderen Additiven die abweichende Friktion zuzuordnen ist. Dieses Verhalten hat Einfluss auf den Verschließwinkel bei gleicher Verschlussform aber unterschiedlicher Farbe.

Dies wird deshalb so gemacht, weil beim Applizieren beispielsweise in beiden Fällen die Friktion durch Befeuchten herabgesetzt ist, um den Vorgang zu erleichtern. Auswirkungen hat das Ganze beim Endverbraucher. Hier wirkt die unterschiedliche Friktion und würde bei gleichem Verschließwinkel zu schwer oder leichtgängig zu öffnenden Behältern führen. Wird der Verschließwinkel an die Friktion adaptiert, bleibt das Öffnen unabhängig davon.

Nachteilig am Stand der Technik ist das unterschiedliche Aufschraubverhalten bei einer anderen Verschlussfarbe.

So erlangt die Verschlussfarbe A mit geringerer Friktion tendenziell einen höheren Verschließwinkel als die Verschlussfarbe B und höherer Friktion. Sie erreicht einen geringeren Verschließwinkel. Der Verschließwinkel wird über das Grenzdrehmoment, bei dem der Schraubvorgang abbricht, eingestellt. So kann es sein, dass nur wegen einer anderen Verschlussfarbe ein neues Verschließprogramm mit anderem Grenzdrehmoment erstellt und bei Produktion der Farbe auf dieses gewechselt werden muss. Ändern sich nach einer Überholung grundlegend etwas am Grenzdrehmoment, müssen alle Sorten neu eingestellt werden.

Der vorliegenden Erfindung liegt die Aufgabe zugrunde, die aus dem Stand der Technik bekannten Nachteile zu überwinden und ein Verfahren sowie eine Inspektionsvorrichtung zum Inspizieren von mit Verschlüssen versehenen Behältnissen sowie ein Verfahren und eine Verschließvorrichtung zum Verschließen von Behältnissen mit Verschlüssen bereitzustellen, welche ein in höchstem Maße genaues und zuverlässiges und flexible an die Verschlusssorte und/oder Behältnissorte anpassbare und gleichermaßen bedienerfreundliche Verschließvorgänge sowie deren Überprüfung durch Inspektion der mit Verschlüssen versehenen Behältnisse bereitzustellen.

Die Aufgabe wird erfindungsgemäß durch die Gegenstände der unabhängigen Ansprüche gelöst. Vorteilhafte Ausführungsformen und Weiterbildungen der Erfindung sind Gegenstand der Unteransprüche.

Bei einem erfindungsgemäßen Verfahren zum Inspizieren von mit Verschlüssen versehenen Behältnissen zur Überprüfung einer Dichtfunktion zwischen dem Verschluss und einem damit versehenen Behältnis, wobei der Verschluss durch Anordnen in Verschließrichtung an einem Mündungsbereich des Behältnisses angeordnet ist, werden die Behältnisse, insbesondere als Behältnisstrom, (fortlaufend) mittels einer Transporteinrichtung einbahnig entlang eines vorgegebenen Transportpfads transportiert. Insbesondere dient das Verfahren der Überprüfung eines ordnungsgemäßen (durch eine nachfolgend beschriebene Verschließvorrichtung durchgeführten) Verschließvorgangs. Bei den Behältnissen handelt es sich bevorzugt um befüllte Behältnisse.

Bei den Behältnissen handelt es sich bevorzugt um Kunststoffbehältnisse (insbesondere PET-Behältnisse), Behältnisse deren Hauptbestandteil aus Pulpe besteht und/oder Glasbehältnisse. Bei den Behältnissen kann es sich dabei um Behältnisse aus der Getränke- und/oder Lebensmittel- und/oder Kosmetikindustrie handeln. Beispielsweise kann es sich um Flaschen, wie etwa Glasflaschen, Pulpeflaschen und Kunststoffflaschen handeln.

Die Verschlüsse weisen bevorzugt einen Deckelabschnitt und eine um eine Verschließrichtung und/oder um eine Mündung und/oder ein Mundstück der Behältnisse und/oder um einen Mündungsbereich der Behältnisse umlaufende Umfangswandung auf. Bevorzugt ist der Deckelabschnitt und/oder ein Querschnitt durch den Verschluss im Wesentlichen kreisförmig bzw. kreislinienförmig. Bevorzugt erstreckt sich die Verschließrichtung durch den Mittelpunkt des Kreises bzw. der Kreislinie. Bevorzugt erstreckt sich die Verschließrichtung entlang einer Richtung einer zum Deckelelement gebildeten Normalen.

Bevorzugt handelt es sich bei der Verschließrichtung um die geradlinig erstreckende Richtung, in welcher der Verschluss auf das Behältnis zum Verschließen des Behältnisses (während gegebenenfalls begleitender Drehbewegungen) zubewegt werden muss. Bevorzugt erstreckt sich die Verschließrichtung entlang der Längsrichtung des Behältnisses. Bevorzugt handelt es sich bei der Längsrichtung des Behältnisses um eine Haupterstreckungsrichtung. Bevorzugt erstreckt sich die Längsrichtung entlang einer Mittelachse des Behältnisses, insbesondere des Grundkörpers und/oder der Behältnisöffnung und/oder des Mündungsbereichs des Behältnisses. Bevorzugt ist in Längsrichtung des Behältnisses gesehen, der Mündungsbereich oberhalb eines Boden- und/oder Standbereichs des Behältnisses angeordnet.

Besonders bevorzugt weist die Umfangswandung an ihrer Innenoberfläche ein Innengewinde auf, welches entsprechend auf ein Außengewinde des Behältnisses aufgeschraubt werden kann.

Der Mündungsbereich der Behältnisse weist insbesondere die eine Öffnung des Behältnisses bildenden Behältnisbereiche, insbesondere ein Mundstück des Behältnisses, auf. Bevorzugt weist der Mündungsbereich auch einen hieran anschließenden Bereich eines Tragrings und/oder eines Behältnishalses auf.

Bevorzugt handelt es sich bei dem Mündungsbereich um den während des Herstellungsprozesses des Behältnisses, insbesondere des Blasformprozesses des Behältnisses (aus einem Vorformling), nicht verformten und/oder nicht verstreckten Behältnisbereichs.

Bevorzugt weist der Mündungsbereich einen, sich bevorzugt in Längsrichtung gesehen unterhalb und/oder in Richtung des Bodenbereichs an den Tragring anschließenden (bevorzugt rotationssymmetrischen) Bereichs, welcher insbesondere über einen (vollumfänglich) umlaufenden Knick und/oder Kante in einen weiteren Behältnisabschnitt, wie etwa einen Schulterbereich und/oder einen sich (bei Betrachtung eines sich entgegen der Längsrichtung erstreckenden Oberflächenverlaufs) in radialer Richtung in Bezug auf die Längsrichtung verbreiternden Bereich übergeht. Bevorzugt handelt es sich bei dem Knick bzw. bei der Kante um eine Begrenzung des während des Blasformprozesses verstreckten Grundkörpers des Behältnisses und des während des Blasformprozesses nicht-verstreckten Bereichs.

Das Inspektionsverfahren wird bevorzugt von einer in einem nachfolgenden Abschnitt beschriebenen Inspektionsvorrichtung durchgeführt.

Das Verfahren umfasst bevorzugt, dass, bevorzugt während dieses Transports, die mit den Verschlüssen versehenen Behältnisse von einer Beleuchtungseinrichtung wenigstens bereichsweise beleuchtet werden.

Das Verfahren umfasst, dass wenigstens eine Bildaufnahmeeinrichtung, bevorzugt eine Vielzahl von Bildaufnahmeeinrichtungen, wenigstens ein ortsaufgelöstes Bild (und bevorzugt eine Vielzahl ortsaufgelöster Bilder) des zu inspizierenden, mit dem Verschluss versehenen Behältnisses aufnimmt.

Dabei ist bevorzugt, dass die Vielzahl von Bildaufnahmeeinrichtungen jeweils (wenigstens oder genau) ein ortsaufgelöstes Bild aufnimmt. Denkbar ist aber auch, dass die Vielzahl von Bildaufnahmeeinrichtungen (gemeinsam), das wenigstens eine Bild aufnimmt, welches aus den von den Bildaufnahmeeinrichtungen jeweils einzeln aufgenommenen Bildern (etwa durch Stitching und/oder Matching) zusammengesetzt ist. Denkbar ist grundsätzlich auch, dass durch eine genau bestimmte und festgelegte (und bekannte) Kalibrierung der Bildaufnahmeeinrichtungen gegenüber einander und/oder gegenüber dem Behältnis auch eine Relativposition des Verschlusses gegenüber dem Behältnis aus dem aus wenigstens zwei von verschiedenen Bildaufnahmeeinrichtungen aufgenommenen ortsaufgelösten Bildern auch (aus dem aus mehreren Bildern aggregierten Bild) ermittelbar ist, wenn die wenigstens zwei ortsaufgelösten Bilder (oder jedes dieser Bilder) nicht notwendigerweise sowohl das Behältnis als auch den Verschluss abbildet.

Die nachfolgende Beschreibung erfolgt in Bezug auf das "wenigstens eine (ortsaufgelöste) Bild". Dies ist insbesondere so zu verstehen, dass es sich dabei um ein aus einer Einzelaufnahme resultierendes (ortsaufgelöstes) Bild oder aus mehreren Einzelaufnahmen (von einer oder der Vielzahl von Bildaufnahmeeinrichtungen) zusammengesetztes oder aggregiertes Bild handelt.

Die Vielzahl von Bildaufnahmeeinrichtungen (bevorzugt zwei oder vier Bildaufnahmeeinrichtungen) kann dabei im Wesentlichen zeitgleich (oder lediglich um ihren Blitzlampeneinsatz versetzt) und/oder innerhalb eines Zeitintervalls von weniger als 1 s, bevorzugt weniger als 0,5 s und besonders bevorzugt weniger als 0,3 s, bevorzugt weniger als 0,2 s, bevorzugt weniger als 0,1 s das jeweilige ortsaufgelöste Bild aufnehmen. Insbesondere wird vorgeschlagen, die Erkennung und/oder die Erfassung mit mindestens zwei Bildaufnahmeeinrichtungen, insbesondere Kameras, durchzuführen. Zwei oder vier Kameras sind optimal, es können auch drei oder mehr als vier sein.

Bei einem weiteren bevorzugten Verfahren nimmt wenigstens eine zweite Bildaufnahmeeinrichtung wenigstens ein ortsaufgelöstes Bild eines Abschnitts des Umfangsrandes und/oder eines Abschnitts des Behältnisses, insbesondere eines rotationssymmetrischen Elements auf. Bei diesem Verfahren werden mindestens zwei Bildaufnahmeeinrichtungen eingesetzt.

Zur Überprüfung der Dichtfunktion wird erfindungsgemäß von der wenigstens einen Bildaufnahmeeinrichtung, bevorzugt von der Vielzahl von Bildaufnahmeeinrichtungen, das wenigstens eine ortsaufgelöste Bild (bevorzugt eine Vielzahl ortsaufgelöster Bilder) derart (optisch) aufgenommen, dass hierdurch eine in (die) Verschließrichtung betrachtete Relativposition des Verschlusses gegenüber dem damit versehenen Behältnis abgebildet wird.

Mit anderen Worten werden Bilddaten (durch die wenigstens eine Bildaufnahmeeinrichtung) erfasst bzw. aufgenommen, welche charakteristisch sind für eine in Verschließrichtung betrachtete (und/oder vorliegende) Relativposition des Verschlusses gegenüber dem Behältnis, welches mit dem Verschluss versehen ist. Mit anderen Worten werden Bilddaten (durch die wenigstens eine Bildaufnahmeeinrichtung) erfasst bzw. aufgenommen, welche charakteristisch sind für einen sich in Verschließrichtung erstreckenden Abstand zwischen dem Verschluss und dem Behältnis, insbesondere zwischen dem Verschluss und einem Referenzbereich des Behältnisses.

Denkbar ist dabei, dass sich die abzubildende Relativposition ausschließlich auf eine Komponente der Relativposition des Verschlusses gegenüber dem Behältnis bezieht, welche (im Wesentlichen) ausschließlich entlang der Verschließrichtung verläuft.

Bevorzugt wird durch die Bildaufnahme und/oder bevorzugt ist in dem aufgenommenen wenigstens einen ortsaufgelösten Bild (wenigstens abschnittsweise und bevorzugt zumindest in Verschließrichtung und/oder Längsrichtung vollständig) der Verschluss abgebildet.

Bevorzugt wird durch die Bildaufnahme und/oder bevorzugt ist in dem aufgenommenen wenigstens einen ortsaufgelösten Bild ein Abschnitt des Behältnisses, insbesondere eines Mündungsbereichs und/oder eines in Bezug auf den Behältnisboden (und/oder in Bezug auf einen dem Mündungsbereich gegenüberliegenden Wandungsbereich des Behältnisses) in Längsrichtung und/oder entgegen Verschließrichtung gesehenen oberen Bereich des Behältnisses, abgebildet.

Bevorzugt wird durch die Bildaufnahme und/oder bevorzugt ist in dem aufgenommenen wenigstens einen ortsaufgelösten Bild ein Abschnitt der Umfangswandung des Verschlusses und/oder des Behältnisses abgebildet, welcher sich in Umfangsrichtung (in Bezug auf die Verschließrichtung und/oder die Längsrichtung des Behältnisses) über einen Winkel von wenigstens 30°, bevorzugt wenigstens 50°, bevorzugt wenigstens 60°, bevorzugt wenigstens 90°, bevorzugt wenigstens 120°, bevorzugt wenigstens 180°, bevorzugt wenigstens 220°, bevorzugt wenigstens 270°, bevorzugt wenigstens 300°, bevorzugt wenigstens 330° und bevorzugt (im Wesentlichen) von 360° (vollumfänglich) erstreckt. Die Umfangsrichtung entspricht insbesondere einer Drehrichtung um die Verschließrichtung und/oder die Längsrichtung des Behältnisses. Die angegebenen (Erstreckungs-)Winkel entsprechen insbesondere Drehwinkel um die Verschließrichtung und/oder Längsrichtung des Behältnisses.

Bei der durch die Bildaufnahme des wenigstens einen ortsaufgelösten Bildes abzubildenden und in dem (dann durch die wenigstens eine Bildaufnahmeeinrichtung) aufgenommenen ortsaufgelösten Bild abgebildeten Relativposition kann es sich dabei um einen in Verschließrichtung betrachteten und/oder vorliegenden Abstand zwischen dem Verschluss und dem damit versehenen Behältnis handeln. Mit anderen Worten wird derart ein ortsaufgelöstes Bild aufgenommen, dass auf diesem ein Abstand (insbesondere ausschließlich) in Verschließrichtung gesehen zwischen dem Verschluss und einem Referenzbereich des Behältnisses ersichtlich ist.

Erfindungsgemäß ermittelt eine, insbesondere Prozessor-basierte, Bildauswerteeinrichtung (insbesondere in einem Computer-implementierten Schritt) auf Grundlage der in dem wenigstens einen ortsaufgelösten Bild abgebildeten Relativposition wenigstens eine für eine Erfüllung der Dichtfunktion charakteristische Dichtheitsgröße. Bevorzugt verarbeitet die Bildauswerteeinrichtung das wenigstens eine ortsaufgelöste Bild und ermittelt hierdurch die Dichtheitsgröße.

Bevorzugt wird die Dichtheitsgröße verwendet, um einen korrekten Sitz des Verschlusses an dem Behältnis, insbesondere eine Position des Verschlusses in Längsrichtung und/oder Verschließrichtung gegenüber dem Behältnis auszuwerten und/oder zu überprüfen.

Bevorzugt werden die mit den Verschlüssen versehenen Behältnissen fortlaufend inspiziert und zu jedem inspizierten mit Verschluss versehenen Behältnis wird (bevorzugt in Echtzeit) wenigstens eine Dichtheitsgröße (wie obig beschrieben) ermittelt. Die nachfolgende Beschreibung und bevorzugten Ausführungsformen werden lediglich in Bezug auf ein mit einem Verschluss versehenes Behältnis beschrieben. Es versteht sich, dass die Beschreibung bevorzugt für jedes (nacheinander) inspizierte Behältnis ebenso gilt.

Mit anderen Worten wird durch das vorgeschlagene Verfahren eine Bestimmung eines für Erfüllung der Dichtfunktion vorgeschlagen, welche nicht auf (zur Markierung eines Verschlussdrehwinkels vorgesehenen) Markierungen am Behälter als auch am Verschluss beruht, sondern auf diese vorteilhaft gleichermaßen verzichtet. Insbesondere bezieht sich das vorgeschlagene Verfahren auf eine (in Bezug auf einen eine Drehposition kennzeichnende) markerlose Verschlussdrehwinkelmessung.

Bevorzugt wird vorgeschlagen, die Dichtfunktion von Verschluss und Mundstück (des Behältnisses) nicht über den Verschlussdrehwinkel, sondern den Abstand des Verschlusses zum Mundstück an dessen eigentlichen Positionen von außen zu messen.

Insbesondere werden die beiden Positionen (des Verschlusses und des Mundstücks) in Relation gebracht.

Bevorzugt werden die Merkmale des Mundstücks und oder die Merkmale des Verschlusses räumlich erfasst.

Besonders bevorzugt wird der Abstand des Verschlusses und des Mundstücks räumlich erfasst (insbesondere mittels Bildaufnahme und Auswertung des wenigstens einen ortsaufgelösten Bildes).

Bei einem bevorzugten Verfahren ist die ermittelte Dichtheitsgröße für einen, insbesondere maximalen, Abstand zwischen einem zur Erfüllung der Dichtfunktion vorgesehenen Dichtbereichs an dem Verschluss (wie beispielsweise Dichtlippen), und einem zur Erfüllung der Dichtfunktion vorgesehenen, korrespondierenden Dichtbereich an dem Behältnis, insbesondere einer Stirnfläche eines Mündungsbereichs des Behältnisses charakteristisch. Dies bietet den Vorteil, dass von diesem Abstand eine Dichtwirkung bzw. eine Erfüllung der Dichtfunktion abgeleitet werden kann.

Weiter vorteilhaft kann ausgehend von diesem Abstand ermittelt werden, ob und inwieweit der Verschluss in Verschließrichtung auf das Behältnis (noch weiter) zubewegt werden muss, um eine gewünschte und/oder optimale Dichtwirkung zu erfüllen bzw. eine Umsetzung der Dichtfunktion zu gewährleisten. Vorteilhaft kann im Falle von Schraubverschlüssen ermittelt werden, mit welchem Drehmoment der Verschluss noch auf den Mündungsbereich aufzuschrauben ist, um eine beabsichtigte Dichtheitswirkung zu erzielen und/oder um die Dichtfunktion zu erfüllen. Denkbar ist auch, dass ermittelt wird, mit welchem Gesamtdrehmoment und/oder wie ein (in der Verschließvorrichtung bei diesem Verschließvorgang angewandte) Gesamtdrehmoment zu ändern ist, um einen gleichartigen Verschluss auf ein gleichartiges Behältnis mit gewünschtem Ergebnis aufzubringen.

Bei dem Abstand handelt es sich bevorzugt um einen Abstand in Längsrichtung und/oder Verschließrichtung. Beispielsweise kann ein Dichtbereich an der Innenfläche des Deckelelements des Verschlusses angeordnet sein. Der korrespondierende Dichtbereich kann an der Stirnseite des Mündungsbereichs des Behältnisses angeordnet sein. In diesem Fall kann aus einem (in Längsrichtung bzw. Verschließrichtung) ermittelten Abstand zwischen dem Verschluss und dem Behältnis (im Wesentlichen) unmittelbar eine Einbringtiefe des Mündungsbereichs in den Verschluss und/oder eine Aufschraubtiefe des Verschlusses auf das Mundstück bzw. auf den Mündungsbereich ermittelt bzw. abgeleitet werden (da die jeweiligen Änderungen dieser Abstände bei relativer Bewegung des Verschlusses in Richtung des Behältnisses in Verschließrichtung gleich sind).

Denkbar ist aber auch, dass wenigstens ein korrespondierender Dichtbereich an dem Behältnis bzw. an dem Verschluss seitlich an dem Mündungsbereich bzw. an der (umlaufenden) Innenwandung der Umfangswandung des Verschlusses angeordnet sind. Auch dieser Abstand korreliert insbesondere gemäß der geometrischen Ausgestaltung des Verschlusses und des Mündungsbereichs des Behältnisses mit dem Abstand zwischen dem Verschluss und dem Behältnis, so dass auch hier vorteilhaft durch Ermittlung eines Abstands zwischen dem Verschluss und dem Behältnis eine Erfüllung der Dichtheitsfunktion beurteilt werden kann.

Bevorzugt ermittelt die Bildauswerteeinrichtung (insbesondere in einem Computer-implementierten Schritt) auf Grundlage der in dem wenigstens einen ortsaufgelösten Bild abgebildeten Relativposition wenigstens eine für die Relativposition charakteristische Abstandsgröße (etwa ein Abstandswert). Dabei kann es sich um einen (insbesondere ausschließlich) in Verschlussrichtung und/oder Längsrichtung) betrachteten Abstand zwischen dem Verschluss und dem Behältnis, insbesondere zwischen einem Referenzbereich an dem Verschluss und einem Referenzbereich an dem Behältnis handeln.

Denkbar ist, dass die Bildauswerteeinrichtung aus der für die Relativposition charakteristischen Abstandsgröße die Dichtheitsgröße ermittelt.

Bevorzugt ermittelt die Bildauswerteeinrichtung (insbesondere in einem Computer-implementierten Schritt) auf Grundlage der in dem wenigstens einen ortsaufgelösten Bild abgebildeten Relativposition wenigstens eine für eine Einbringtiefe des Mündungsbereichs in den Verschluss und/oder einer Aufschraubtiefe des Verschlusses auf das Mundstück bzw. auf den Mündungsbereich charakteristische Anbringgröße. Insbesondere kann durch Ermittlung einer Einbringtiefe des Mündungsbereichs in den Verschluss und/oder einer Aufschraubtiefe des Verschlusses auf das Mundstück bzw. auf den Mündungsbereich auf den Abstand der korrespondierenden Dichtungsbereiche des Verschlusses und des Behältnisses geschlossen werden. Vorteilhaft kann ausgehend von der Anbringgröße beurteilt werden, ob eine Dichtwirkung in ausreichendem Maße bereits gewährleistet ist und/oder ob und wie weit zur Erfüllung der Dichtfunktion der Verschluss weiter auf das Behältnis zuzustellen (und anzubringen) ist.

Bevorzugt wird aus der Anbringgröße die Dichtheitsgröße ermittelt.

Insbesondere wird durch das vorgeschlagene Verfahren eine sichere Bestimmung der Aufschraubtiefe des Verschlusses auf das Mundstück ermöglicht. Die Erkennung von Hilfsmarkierungen, die mittels Drehwinkel indirekt den Abstand des Verschlusses zum Mundstück repräsentieren sind nicht notwendig.

Vorteilhaft können daher Verschlüsse und Behältermundstücke, vor allem der Tragringdurchmesser, beliebig gestaltet werden. Es muss keine Rücksicht auf die Sichtbarkeit der Markierungen genommen werden.

Es kann vorteilhaft zugunsten der Kunststoffeinsparung und Ressourcen der Tragering im Durchmesser reduziert werden. Die Sichtbarkeit der Hilfsmarkierung ist nicht mehr erforderlich.

Bevorzugt werden in dem wenigstens einen Bild (insbesondere in Umfangsrichtung gesehen) mehrere Relativpositionen des Verschlusses gegenüber dem Behältnis abgebildet und hieraus (durch die Bildauswerteeinrichtung) eine Dichtheitsgröße und/oder eine Abstandsgröße ermittelt. Bevorzugt wird aus den mehreren (abgebildeten) Relativpositionen eine (gemeinsame) Dichtheitsgröße und/oder eine (gemeinsame) Abstandsgröße ermittelt.

Vorteilhaft wird der Einfluss von systembedingtem Wasser minimiert, da insbesondere das Vorhandsein einzelner Tropfen auf einzelnen zur Bestimmung der Einbringtiefe bzw. Aufschraubtiefe Stellen durch weitere Bereiche ausgeglichen werden kann.

Der Aufwand der Abblasung wird vorteilhaft minimiert.

Ergebnis der Erprobung: Bei Standardverschlüssen eine Messgenauigkeit von ca. 30 µm bei Sigma = 3. Das entspricht bei einer Gewindesteigung von 2,0 mm einer Winkelauflösung von 5,5°. An diesem Beispiel wurde etwa eine Wiederholgenauigkeit von 10 µm bei Sigma =1 erreicht.

Bei einem weiter bevorzugten Verfahren handelt es sich bei der (abgebildeten) Relativposition (des Verschlusses gegenüber dem damit versehenen Behältnis) um eine Relativposition eines zur Erfüllung der Verschließfunktion in Verschließrichtung steif ausgebildeten Bereichs des Verschlusses oder eines hiermit in Verschließrichtung positionsfest verbundenen (und an dem Verschluss) vorhandenen Merkmals gegenüber dem Behältnis. Damit die Dichtfunktion des Verschlusses sicher in das Mundstück und/oder in den Mündungsbereich eingreifen kann, ist bevorzugt sowohl das Mundstück bzw. der Mündungsbereich als auch die Verschlusskappe in axialer Richtung steif ausgeführt. Daher bietet die Wahl von positionsfest mit steifen Bereichen verbundenen Bereichen eine präzise Beurteilung einer Erfüllung der Dichtfunktion.

Alternativ oder zusätzlich handelt es sich bei der (abgebildeten) Relativposition (des Verschlusses gegenüber dem damit versehenen Behältnis), um eine Relativposition des Verschlusses gegenüber einem zur Erfüllung der Verschließfunktion in Verschließrichtung steif ausgebildeten Bereichs des Behältnisses oder einem hiermit in Verschließrichtung positionsfest verbundenen (und an dem Behältnis vorhandenen) Merkmal. Auch hier bietet die Wahl von positionsfest mit steifen Bereichen verbundenen Bereichen eine präzise Beurteilung einer Erfüllung der Dichtfunktion.

Bevorzugt sind die genannten steifen Bereiche steifer als weitere Bereiche des Verschlusses und/oder des Behältnisses.

Bevorzugt wird die Steifheit der genannten Bereiche durch eine im Vergleich zu weiteren Bereichen des Verschlusses und/oder Behältnisses erhöhte Wanddicke bewirkt.

Bei einem weiter bevorzugten Verfahren ist die Relativposition eine Relativposition in Bezug auf wenigstens ein, bevorzugt an der Umfangswandung des Verschlusses vorhandenes äu-ßeres Merkmal. Bevorzugt ist das Merkmal durch an dem Verschluss, insbesondere an der Umfangswandung, vorhandene Struktur gebildet. Bevorzugt erfüllt das Merkmal eine weitere, von der Feststellung einer Drehposition des Verschlusses verschiedene Funktion (wie etwa ein erleichtertes Öffnen).

Dies bietet den Vorteil, dass ein bereits ohnehin vorhandenes Merkmal zur Überprüfung der Dichtheit des Verschlusses verwendet wird und kein von dem Endkonsumenten als optisch nachteilig bewertetes zusätzliches Element zur Markierung einer relativen Drehstellung erforderlich ist. Bevorzugt ist wenigstens ein zu dem wenigstens einen Merkmal identisches Merkmal vorhanden, welches symmetrisch gegenüber einer Längsschnittebene durch den Verschluss angeordnet ist.

Bei der genannten Struktur kann es sich besonders bevorzugt um eine Struktur handeln, die sich aus einem (insbesondere vertikalen) Vorsprung oder einer (insbesondere vertikalen) Erhebung, einer Vielzahl von (insbesondere vertikalen) Vorsprüngen oder (insbesondere vertikalen) Erhebungen und/oder einer (insbesondere vertikalen) Vertiefung ergibt. Diese können dabei (in vorgegebener Weise) beispielsweise gleichmäßig über den Umfangsrand verteilt sein.

Bei dem wenigstens einen Merkmal kann es sich um ein, das Öffnen des Behältnisses erleichterndes Merkmal handeln.

Bevorzugt ist das Merkmal bevorzugt ausgewählt aus einer Gruppe umfassend Merkmale, welche durch eine Rändelstruktur, mehrere Rändelstrukturen, einen Perforationsbereich insbesondere als Grenze zum Sicherungsring, einen oder mehrere Knicke, eine Rille, mehrere Rillen, eine umlaufende Kante, ein bezüglich der Verschließrichtung kontinuierlich oder diskret rotationssymmetrisch ausgebildetes Merkmal, und dergleichen sowie Kombinationen hiervon gebildet sind.

Bevorzugt sind diese Merkmale an der äußeren Umfangswandung vorhanden. Bevorzugt wird das wenigstens eine Merkmal durch Bildaufnahme der äußeren Umfangswandung (in dem wenigstens einen ortsaufgelösten Bild) abgebildet.

Bei einem weiter bevorzugten Verfahren ist die Relativposition eine Relativposition in Bezug auf ein in einem Bereich der Mündung des Behältnisses angeordnetes rotationssymmetrisches Element (des Behältnisses), insbesondere einen Tragring, eine Tragringunterseite, eine Tragringaußenkante, einen Knick zwischen Tragring und einem verstreckbaren und/oder verstreckten Bereich des Behältnisses und/oder eine Begrenzungslinie zwischen einem verstreckten und einem nicht verstreckten Bereich des Behältnisses (jeweils als Referenzbereich an dem Behältnis).

Bei diesen Referenzbereichen handelt es sich insbesondere um optisch vergleichsweise einfach zu erfassende Merkmale, insbesondere auch weil sich diese vollumfänglich über die gesamte Umfangswandung erstrecken und/oder weil sich diese vergleichsweise stark von den benachbarten Bereichen abgrenzen (vergleichsweise großer Vorsprung des Tragrings gegenüber den umliegenden Oberflächenbereichen, deutlicher Knick zwischen Tragring und einem verstreckbaren und/oder verstreckten Bereich des Behältnisses mit vergleichsweise großem Knickwinkel).

Bevorzugt wird auf Grundlage mehrerer in dem wenigstens einen ortsaufgelösten Bild abgebildeten Merkmale und/oder mehrerer in dem wenigstens einen ortsaufgelösten Bild abgebildeter Referenzbereiche an dem Behältnis die Dichtheitsgröße und/oder die Abstandsgröße und/oder die Anbringgröße und/oder eine für die Einbringtiefe und/oder die Aufschraubtiefe charakteristische Größe ermittelt.

Bevorzugt wird die Dichtheitsgröße und/oder die Abstandsgröße und/oder die Anbringgröße und/oder eine für die Einbringtiefe und/oder die Aufschraubtiefe charakteristische Größe unter Verwendung eines, insbesondere trainierbaren, Bildauswertungs-Modells maschinellen Lernens, welches einen Satz insbesondere trainierbarer, Parameter umfasst, welche auf Werte eingestellt sind, die als Ergebnis eines Trainingsprozesses gelernt wurden, ermittelt.

Bevorzugt basiert das Bildauswertungs-Modell maschinellen Lernens auf einem (künstlichen) neuronalen Netzwerk. Bevorzugt ist das neuronale Netzwerk als tiefes neuronales Netzwerk (Deep Neural Network, DNN), bei dem die parametrierbare Verarbeitungskette eine Mehrzahl von Verarbeitungsschichten aufweist, und/oder ein sogenanntes Convolutional Neural Network (CNN) (dt. Faltungsnetzwerk) und/oder ein rekurrentes Neuronales Netzwerk (RNN, engl. Recurrent Neural Network) ausgebildet.

Bevorzugt werden dem Bildauswertungs-Modell bzw. dem (künstlichen) neuronalen Netzwerk die (zu verarbeitenden) Daten, insbesondere die ortsaufgelösten Bilder (oder hiervon abgeleitete Daten), als Eingangsgrößen zugeführt. Bevorzugt bildet das Bildauswertungs-Modell bzw. das künstliche neuronale Netzwerk die Eingangsgrößen in Abhängigkeit einer parametrierbaren Verarbeitungskette auf Ausgangsgrößen ab, wobei als Ausgangsgröße bevorzugt die Dichtheitsgröße und/oder die Abstandsgröße und/oder die Anbringgröße und/oder eine für die Einbringtiefe und/oder die Aufschraubtiefe charakteristische Größe gewählt sind.

Bevorzugt wird/wurde das Bildauswertungs-Modells maschinellen Lernens unter Verwendung vorgegebener Trainingsdaten trainiert, wobei durch das Training die parametrierbare Verarbeitungskette parametriert wird.

Bei einem bevorzugten Verfahren werden in dem Trainingsprozess des Bildauswertungs-Modells Trainingsdaten verwendet, welche eine von der wenigstens einen Bildaufahmeeinrichtung erfasste Vielzahl von ortsaufgelösten Bildern (von mit Verschlüssen versehenen Behältnissen) umfassen. Dies bietet den Vorteil, dass bereits der Trainingsprozess spezifisch auf die einzustellende Inspektionsvorrichtung abgestimmt wird und beispielsweise damit spezifische Gegebenheiten der spezifischen Behältnisinspektionsvorrichtung, wie optische Eigenschaften der Bildaufnahmeeinrrichtung oder auch spezifische Lichtverhältnisse in der Inspektionsvorrichtung, unmittelbar berücksichtigt werden können.

Bevorzugt werden die zur Verwendung als Trainingsdaten vorgesehenen (von der wenigstens einen Bildaufnahmeeinrichtung aufgenommenen) ortsaufgelösten Bilder mit (Behältnis-)Sorten- und/oder Klassifikationsmerkmalen versehen.

Bevorzugt werden die ortsaufgelösten Bilder zusammen mit den jeweils ihnen zugeordneten Behältnissorten- und/oder Verschlusssorten- und/oder für eine Verschlusszusammensetzung (Farbbeigabe, Additive, insbesondere eine Friktion beeinflussende Bestandteile) charakteristische Merkmale und/oder Klassifikationsmerkmalen als Trainingsdatensatz (insbesondere auf einer und/oder der nicht-flüchtigen Speichereinrichtung) abgelegt und/oder verwendet. Bevorzugt wird auf diese Weise eine Vielzahl von Trainings-Datensätzen erzeugt.

Bei den Klassifikationsmerkmalen kann es sich dabei bevorzugt um die Dichtheitsgröße und/oder die Abstandsgröße und/oder die Anbringgröße und/oder eine für die Einbringtiefe und/oder die Aufschraubtiefe charakteristische Größe handeln.

Durch die Verwendung eines Bildauswertungs-Modells maschinellen Lernens wird erreicht, dass ein für die Datenverarbeitung optimale (komplexe) Kombination verschiedener Merkmale und/oder Referenzbereiche (in dem Trainingsprozess) sowie in verschiedenste unterschiedliche Verschlusssorten und/oder Behältnissorten angepasste Merkmale (bzw. Merkmalskombinationen) identifiziert bzw. ermittelt wird.

Dies bietet den Vorteil, dass sodann bei Auswertung des wenigstens einen ortsaufgelösten Bildes mittels des trainierten Bildauswertungs-Modells mit hoher Präzision die Dichtheitsgröße und/oder die Abstandsgröße und/oder die Anbringgröße und/oder eine für die Einbringtiefe und/oder die Aufschraubtiefe charakteristische Größe ermittelt werden kann.

Bei einem weiter bevorzugten Verfahren nimmt die wenigstens eine (bevorzugt jede) Bildaufnahmeeinrichtung die Behältnisse aus einer Richtung auf, die mit einer senkrecht zu der Längsrichtung des Behältnisses und/oder mit einer senkrecht zu der Verschließrichtung stehenden horizontalen Ebene einen Winkel von höchstens 60°, bevorzugt höchstens 30°, bevorzugt einen Winkel von im Wesentlichen 0° und besonders bevorzugt einen Winkel zwischen 5° - 15° einschließt.

Das Behältnis steht aufrecht am (Transport-)Band (im Raum). Die horizontale Ebene ist hier insbesondere parallel zur (Transport-)Band(-ebene), auf welchem das Behältnis aufrecht steht. Die Bildaufnahmeeinrichtung-Blickachse (bevorzugt Kamera-Blickachse) und/oder Bildaufnahmeachse der wenigstens einen (bevorzugt jeder) Bildaufnahmeeinrichtung nimmt gegenüber der horizontalen Ebene eine, nach unten geneigte, Richtung ein. D.h. die wenigstens eine (bevorzugt jede) Bildaufnahmeeinrichtung (bevorzugt Kamera) blickt auf den Verschluss und Behälter nicht horizontal, sondern mit leicht gesenktem Blick. Der Winkel zwischen der horizontalen Ebene und der(n) Bildaufnahmeeinrichtung(en) (bevorzugt der(n) Kamera(s)) ist bevorzugt höchstens 60° nach unten, bevorzugt höchstens 30° nach unten, besonders bevorzugt bei 5° - 15° nach unten.

Bevorzugt ist die wenigstens eine Bildaufnahmeeinrichtung und besonders bevorzugt sind die (bevorzugt alle) Bildaufnahmeeinrichtungen oberhalb des (zu inspizierenden) Behältnisses angeordnet. Bevorzugt sind die wenigstens eine Bildaufnahmeeinrichtung und besonders bevorzugt sind die (bevorzugt alle) Bildaufnahmeeinrichtungen in einer (senkrecht auf die Längsrichtung und/oder Verschlussrichtung des Behältnisses stehende) horizontalen Ebene (in Längsrichtung des zu inspizierenden Behältnisses, von einem Bodenbereich des Behältnisses in Richtung des Mündungsbereichs des Behältnisses, gesehen) oberhalb des (zu inspizierenden) Behältnisses angeordnet.

Bevorzugt ist die wenigstens eine Bildaufnahmeeinrichtung, bevorzugt sind die Bildaufnahmeeinrichtungen (daher in Folge) näher an der Mündung des Behältnisses als an dem Bodenbereich des Behältnisses angeordnet. Bevorzugt schließt die Bildaufnahme-Achse der wenigstens einen (bevorzugt jeder) Bildaufnahmeeinrichtung einen Neigungswinkel von höchstens 60°, bevorzugt höchstens 30° und besonders bevorzugt einen Neigungswinkel zwischen 5° und 15° mit der horizontalen Ebene ein.

Bevorzugt ist die Bildaufnahme-Achse der (jeweiligen) Bildaufnahmeeinrichtung ausgehend von der Bildaufnahmeeinrichtung in Richtung des von der Bildaufnahmeeinrichtung aufzunehmenden Objekts (hier Behältnis), bzw. in Richtung der Inspektionsposition, (in Bezug auf die Längsrichtung des Behältnisses ausgehend vom Behältnisboden in Richtung Behältnismündung gesehen) nach unten und/oder (nach unten) zur Mündung des Behältnisses hin geneigt.

Eine (im Wesentlichen) waagrechte Bildaufnahmerichtung (waagrechter Blick der Bildaufnahmeeinrichtung), bei welcher die Bildaufnahmeeinrichtung die Behältnisse aus einer Bildaufnahmerichtung aufnimmt, welche (im Wesentlichen) parallel zur (senkrecht zur Längsrichtung und/oder Verschließrichtung stehenden) horizontalen Ebene angeordnet ist, also einen Winkel von im Wesentlichen 0° mit der horizontalen Ebene einschließt, ist ebenfalls bevorzugt denkbar.

Die Kamera-Blickachse bzw. die Bildaufnahmerichtung (oder Bildaufnahme-Achse) einer (jeden) Bildaufnahmeeinrichtung und die Behälter-/Verschluss- Achse (bzw. Längsachse) müssen sich nicht zwingend schneiden. Die Kamera bzw. Bildaufnahmeeinrichtung kann auch danebenschielen. Das tut sie in der Praxis immer, weil das Behältnis (bevorzugt) während des Transports aufgenommen wird und selten die Idealposition einnimmt. Insbesondere schielen die Bildaufnahmeeinrichtungen bzw. Kamera(s) immer ein wenig, weil die Ausrichtung nie perfekt ist. Kompensiert wird das bevorzugt durch eine (oben schon benannte) Kalibrierung. Bevorzugt sollte die Bildaufnahmeeinrichtung (Kamera) nicht mehr als +- 20° an der Behälter-/Verschlussachse (bzw. Längsachse des Behältnisses) vorbeischielen, besonders bevorzugt nicht mehr als 3°.

Bevorzugt ist an einer (jeden) Bildaufnahmeeinrichtung ein (bevorzugt diffuses), insbesondere flächiges, Streuelement angeordnet, welches sich bevorzugt entlang einer Ebene senkrecht zur Bildaufnahme-Achse bzw. Bildaufnahme und/oder (insbesondere vollumfänglich) um die Bildaufnahme-Achse herum erstreckt. Dieses Streuelement dient bevorzugt als jeweiliger Hintergrund für eine (jeweils) gegenüberliegende Bildaufnahmeeinrichtung. Bevorzugt weist das Streuelement eine Öffnung auf, durch welche hindurch sich die Bildaufnahme-Achse der jeweiligen Bildaufnahmeeinrichtung erstreckt. Diese Öffnung ist bevorzugt eine Öffnung für ein Objektiv der Bildaufnahmeeinrichtung. Damit die jeweilig gegenüberliegende Bildaufnahmeeinrichtung nicht die Öffnung des Streuelements (als Hintergrund) sondern das (diffuse) Streuelement bei der Bildaufnahme aufnimmt, wird bevorzugt ein Neigungswinkel von 15-30° zur Anordnung der (jeder) Bildaufnahmeeinrichtung gewählt.

Bei einem weiter bevorzugten Verfahren wird das wenigstens eine ortsaufgelöste Bild, bevorzugt eine Vielzahl ortsaufgelöster Bilder, von wenigstens zwei, bevorzugt wenigstens drei, bevorzugt wenigstens vier, bevorzugt mehr als vier Bildaufnahmeeinrichtungen und besonders bevorzugt von zwei oder vier Bildaufnahmeeinrichtungen aufgenommen. Bevorzugt nehmen die Bildaufnahmeeinrichtungen jeweils einen Abschnitt des Umfangsrandes und/oder wenigstens eines Abschnitts des rotationssymmetrischen Elements (Tragring) auf.

Bei einem weiter bevorzugten Verfahren wird die ermittelte Dichtheitsgröße, welche bevorzugt für eine Anordnungstiefe, insbesondere eine Aufschraubtiefe, des Verschlusses in Bezug auf das Behältnis charakteristisch ist, zur Übermittlung an eine Verschließvorrichtung zum Verschließen von Behältnissen mit Verschlüssen bereitgestellt. Bevorzugt wird die ermittelte Dichtheitsgröße an die Verschließvorrichtung übermittelt. Dies bietet den Vorteil, dass die Verschließvorrichtung eine Rückkopplung der Messergebnisse bereitgestellt wird.

Bevorzugt wird vorgeschlagen, die Aufschraubtiefe an die Verschließeinrichtung zurückzumelden. Dies bietet den Vorteil, dass diese mit einem applizierten Drehmoment verglichen werden kann.

Dabei ist es von Vorteil über eine bestimmte Anzahl von Messungen (insbesondere der ermittelten Dichtheitsgröße, welche bevorzugt für eine Anordnungstiefe, insbesondere eine Aufschraubtiefe, des Verschlusses in Bezug auf das Behältnis charakteristisch ist) einen Sammelwert zu bestimmen. Der Sammelwert kann sein ein Mittelwert, einen repräsentativen Wert, ein Wert, der z.B. Messausreißer abmildert oder verwirft. Es ist hilfreich, ein Varianzmaß, eine Abweichung, etc. zu bilden. Dies bietet den Vorteil einer möglichst präzisen Einstellung der Verschließvorrichtung und des hiermit durchgeführten Verschließvorgangs und möglichst präzise Anpassung des Verschließvorgangs an die Sorte des Verschlusses (etwa dessen Farbe und/oder Zusammensetzung und/oder Friktionswerte).

Bei einem weiter bevorzugten Verfahren wird die ermittelte Dichtheitsgröße, welche bevorzugt für eine Anordnungstiefe, insbesondere eine Aufschraubtiefe, des Verschlusses in Bezug auf das Behältnis charakteristisch ist, an die Verschließvorrichtung zum Verschließen von Behältnissen mit Verschlüssen zur Regelung der Verschließvorrichtung übermittelt. Bevorzugt wird die ermittelte Dichtheitsgröße in regelmäßigen Zeitabständen und/oder fortlaufend und/oder bei jedem inspizierten mit Verschluss versehenen Behältnis an die Verschließvorrichtung (insbesondere zu dessen Regelung) übermittelt. Bevorzugt wird die ermittelte Dichtheitsgröße (oder eine hiervon abgeleitete Größe), insbesondere von der Verschließvorrichtung, mit einem applizierten Drehmoment verglichen. Bevorzugt wird hieraus eine Stellgröße abgeleitet. Dies bietet den Vorteil einer Regelung bzw. eines Bereitstellens eines Closed Loop.

Insbesondere werden Veränderungen am Verschließprozess vorteilhaft sicher erkannt.

Bei einem weiter bevorzugten Verfahren wird eine für eine Verschlussfarbe charakteristische Farbgröße und/oder eine Farb-Friktionsgröße, welche charakteristisch ist für eine Farb-Friktion, und/oder einen für eine Umgebungstemperatur charakteristische Umgebungstemperaturgröße ermittelt und/oder zur Übermittlung an eine Verschließvorrichtung zum Verschlie-βen von Behältnissen mit Verschlüssen bereitgestellt.

Insbesondere wird vorgeschlagen, ergänzend die Verschlussfarbe zurückzumelden. Dabei ist es von Vorteil über eine bestimmte Anzahl von Messungen (der Verschlussfarbe), insbesondere sorten-individuell, einen Sammelwert zu bestimmen. Der Sammelwert kann seine ein Mittelwert, einen repräsentativen Wert, ein Wert, der z.B. Messausreißer abmildert oder verwirft. Es ist hilfreich ein Varianzmaß, eine Abweichung, etc. zu bilden.

Bevorzugt wird vorgeschlagen, ergänzend die Umgebungstemperatur zu ermitteln und zurückzumelden. Auch hier kann über eine bestimmte Anzahl von Messungen ein Sammelwert und/oder ein Varianzmaß gebildet (und übermittelt und/oder abgelegt werden).

Bevorzugt wird vorgeschlagen, zwingend die Aufschraubtiefe, bevorzugt ergänzend die Verschlussfarbe oder alternativ dazu einen Farb-Friktionskorrekturwert, ergänzend die Umgebungstemperatur zu übermitteln.

Durch das hier vorgeschlagene Inspektions- und Regelungsverfahren wird vorteilhaft ausgenutzt, dass die Verwendung einer neuen Verschlussfarbe, dessen geänderter Reibbeiwert keinen Einfluss auf die Aufschraubhöhe hat.

Daher kann bevorzugt das Verfahren zur Inspektion durch Rückmeldung der jeweiligen Aufschraubhöhe (und/oder Dichtheitsgröße und/oder Einbringtiefe und/oder Aufschraubtiefe) oder einer hiervon abgeleiteten oder hierfür charakteristischen Größe und einer hierauf basierenden Steuerung und/oder Regelung der Verschließvorrichtung ohne Eingreifen eines Bedieners eine Anpassung des von der Verschließvorrichtung bei dem Verschließvorgang zu applizierendes (Gesamt-)Drehmoments erfolgen. Dies bietet den Vorteil, dass ein Umstellvorgang auf eine neue Farbe und/oder die Friktion beeinflussende neue Zusammensetzung des Verschlusses basierend auf der bereitgestellten und übermittelten Dichtheitsgröße automatisch erfolgen kann.

Bevorzugt wird jeweils zum Inspizieren der Verschlüsse ein diffuses Auflichtverfahren verwendet.

Bevorzugt werden die Verschlüsse zum Inspizieren von oben beleuchtet. Bevorzugt weist die Inspektionsvorrichtung eine Beleuchtungseinrichtung auf, welche oberhalb der zu inspizierenden, mit Verschlüssen versehenen Behältnisse angeordnet ist und/oder welche dazu geeignet und bestimmt ist, die Verschlüsse von oben zu beleuchten. Ein Durchmesser der Beleuchtungseinrichtung kann beispielsweise größer als 150 mm, bevorzugt größer als 220 mm und besonders bevorzugt größer als 280 mm sein.

Bevorzugt ist die Beleuchtungseinrichtung dazu geeignet und bestimmt, die mit Verschlüssen versehenen (zu inspizierenden) Behältnisse (bei deren Anordnung in Inspektionsposition) diffus von oben zu beleuchten, so dass bevorzugt der Verschluss und die Behältergeometrie (Tragring, Schulterbereich des Behältnisses, ...) gleichermaßen beleuchtet wird. Bevorzugt ist die Beleuchtungseinrichtung derart angeordnet und ausgestaltet, dass das von der Beleuchtungseinrichtung ausgestrahlte Licht (von oben) Glanzstellen an den Hervorhebungen und/oder Schatten an den Vertiefungen erzeugt. Bevorzugt ist die Beleuchtungseinrichtung, besonders bevorzugt zusätzlich, derart angeordnet und ausgestaltet, dass das von der Beleuchtungseinrichtung ausgestrahlte Licht von weiter außen eine gleichmäßige Grundbeleuchtung (des mit dem Verschluss versehenen Behältnisses) erzeugt.

Bevorzugt weist die Beleuchtungseinrichtung eine Lampenfläche auf, welche besonders bevorzugt einen kegelförmigen Leuchtschirm bildet. Insbesondere kann in einer bevorzugten Ausführungsform in der Kegelmitte (des Leuchtschirms) keine Bildaufnahmeeinrichtung angeordnet sein. Denkbar ist, dass in der Kegelmitte (des Leuchtschirms) eine (weitere) Bildaufnahmeeinrichtung (insbesondere Kamera) angeordnet sein, welche beispielsweise den Verschluss(-deckel) auf ein korrektes Etikett/Label hin überprüft.

Bevorzugt ist der Leuchtschirm als flache Scheibe ausgestaltet und/oder ausgebildet. Diese Ausführungsform ist bevorzugt im Falle, dass (zentral bzw. mittig) oberhalb des (zu inspizierenden) mit Verschluss versehenen Behältnisses keine (etwa zur Verschlusskontrolle geeignete und/oder bestimmte) Bildaufnahmeeinrichtung (etwa Kamera) vorgesehen bzw. angeordnet ist.

Besonders bevorzugt erfolgt eine Beleuchtung des Behältnisses und Verschlusses mit Weißlicht und insbesondere mit Weißlicht-LEDs (als Beleuchtungseinrichtung). Besonders bevorzugt wird als Beleuchtungseinrichtung eine Blitzlampenbeleuchtung verwendet. Bevorzugt ist die Bildaufnahme (besonders bevorzugt aller Bildaufnahmeeinrichtungen) auf die Beleuchtung getriggert. Besonders bevorzugt wird auch die Bildaufnahme (insbesondere aller Bildaufnahmeeinrichtungen) - etwa mit einer Lichtschranke - getriggert.

Bei einem besonders bevorzugten Verfahren werden Graustufenbilder oder farb(kodierte) Bilder aufgenommen. Bei einem weiteren vorteilhaften Verfahren wird wenigstens ein farbkodiertes Bild und werden bevorzugt eine Vielzahl von farbkodierten Bildern aufgenommen.

Besonders bevorzugt wird wenigstens eine Maßnahme zur Kontrasterhöhung der aufgenommenen Bilder durchgeführt. Besonders bevorzugt ist diese wenigstens eine Maßnahme aus einer Gruppe von Maßnahmen ausgewählt, welche eine Verarbeitung und insbesondere eine Vorverarbeitung des wenigstens einen ortsaufgelösten Bildes in einem Helligkeitskanal, eine Verarbeitung und insbesondere eine Vorverarbeitung des wenigstens einen ortsaufgelösten Bildes in einem Komplementärkanal, eine Verarbeitung und insbesondere eine Vorverarbeitung des wenigstens einen ortsaufgelösten Bildes in einem Sättigungskanal, Kombinationen aus diesen Maßnahmen und dergleichen enthält.

Diese beschriebenen Verfahren sind für generell alle Typen von Verschlüssen geeignet, was besonders vorteilhaft ist. Bevorzugt ist der Verschluss aus einer Gruppe von Verschlüssen ausgewählt, welche Verschlüsse für den Einhandgebrauch (One Hand use), Flat Caps, Sports Caps, Tethered Caps, mehrteilige Verschlüsse, Push-Pull-Verschlüsse, Schnappverschlüsse, Schraubverschlüsse, Kronen-Korkverschlüsse (Die Kronenzacken und der Blechrand in Relation zum Mundstück des Behälters zeigen ebenso die Dichtheit an) und dergleichen enthält. Besonders bevorzugt handelt es sich jedoch um Verschlüsse, die an den Außengewinden des Behältnisses sitzen.

Weiter vorteilhaft ist, dass durch die vorgeschlagenen Verfahren mehrteilige Gewinde sicher verarbeitet werden können. Die Mehrdeutigkeit des Verschließwinkels entfällt durch das vorgeschlagene Auswertung der (in Längsrichtung und/oder Verschließrichtung betrachteten) Relativposition des Verschlusses gegenüber dem Behältnis.

Daneben kann es sich auch um Verschlüsse handeln, die mit oder ohne eine Staubkappe ausgebildet sind und/oder mit oder ohne ein Garantieband oder ein Sicherungsband zum Erkennen einer Erstöffnung.

Besonders vorteilhaft kann das Verfahren angewandt werden, wenn der Verschluss (kontinuierlich) rotationssymmetrisch aufgebaut ist, d. h. in allen vertikalen Schnitten die gleiche äußere Schnittform beibehält.

Besonders vorteilhaft kann das Verfahren angewandt werden, wenn der Verschluss und/oder das Behältnis, insbesondere der Tragring des Behältnisses, (insbesondere an deren von au-βen inspizierbaren Bereichen) keine eine insbesondere eindeutige Drehposition des Verschlusses bzw. des Behältnisses festlegende Markierung aufweist.

Bei einem besonders bevorzugten Verfahren werden die Behältnisse, insbesondere als Behältnisstrom, während ihrer Inspektion entlang eines geradlinigen oder kreisförmigen Transportpfads und insbesondere entlang eines geradlinigen Transportpfads transportiert.

Bevorzugt handelt es sich bei dem Behältnisstrom um einen (insbesondere kontinuierlichen) Strom von (auf dem Transportpfad) sukzessiv bzw. aufeinanderfolgender Behältnisse. Dabei kann der Behältnisstrom bereichsweise und bevorzugt innerhalb der gesamten Inspektionsvorrichtung (als Massenstrom) einbahnig oder aber auch mehrbahnig (mittels der Transporteinrichtung) geführt bzw. transportiert werden. Bevorzugt ist wenigstens je eine Bildaufnahmeeinrichtung einer Bahn des Behältnisstroms zugeordnet und erfasst jedes auf dieser Bahn befindliche Behältnis des Behältnisstroms.

Bevorzugt wird eine Transporteinrichtung verwendet, die wenigstens 5000 zu inspizierende Behältnisse pro Stunde (zur Bildaufnahmeeinrichtung hin und von dieser weg) transportiert bzw. hierzu geeignet und bestimmt ist.

Bevorzugt wird die Bildaufnahmeeinrichtung und die Vielzahl an Bildaufnahmeeinrichtungen (insbesondere Kameras) und die Anordnung der Bildaufnahmeeinrichtungen (insbesondere Kameras) kalibriert. Bevorzugt werden durch Kalibration Abbildungsparameter ermittelt.

Die vorliegende Erfindung ist weiterhin gerichtet auf ein Verfahren zum Betreiben einer Verschließvorrichtung zum Verschließen von Behältnissen mit Verschlüssen, wobei die Behältnisse mittels einer Transporteinrichtung entlang eines vorgegebenen Transportpfads transportiert werden.

Erfindungsgemäß erfasst die Verschließvorrichtung wenigstens eine gemäß wenigstens einem der vorhergehend beschriebenen (bevorzugt einer Kombination von mehreren und bevorzugt allen) Verfahrensschritte gemäß einer bevorzugten Ausführungsform eines obig beschriebenen Verfahrens (zum Inspizieren von mit Verschlüssen versehenen Behältnissen) ermittelte Dichtheitsgröße und führt in Abhängigkeit dieser wenigstens einen Dichtheitsgröße eine Steuerung und/oder eine Regelung des Verschließvorgangs durch.

Nachteilig am Stand der Technik ist die fehlende Rückkopplung des Verschlussdrehwinkels zum Verschließer. Es kann keine automatisierte Nachjustierung erfolgen.

Vorteilhaft wird in weiten Teilen ein manuelles Nachstellen des Verschließkopfes durch den Regelkreis überflüssig.

Der Verschließer bzw. die Verschließvorrichtung weist bevorzugt ein oder mehrere Einheiten auf (bevorzugt besteht aus ein oder mehreren Einheiten). Bei Anlagenleistungen > 10000 B/h sind bevorzugt mehrere Verschließeinheiten, die sogenannten Verschließköpfe dabei, kontinuierlich Verschlüsse auf das Mundstück aufzubringen. Der Verschließkopf nimmt den Verschluss auf und setzt ihn mit einer Drehbewegung auf das Mundstück auf. Es greifen die Gewindegänge des Mundstücks und des Verschlusses ineinander und mit entsprechendem Vorschub wird der Verschluss aufgeschraubt. Der Prozess wird bei Erreichen eines definierten Drehmoments abgebrochen. Dabei kann die notwendige Abbrucheinrichtung eine mechanische Vorrichtung sein, eine Kupplung, die beim Erreichen eines bestimmten Werts getrennt wird oder ein Drehmomentverlauf eines Motors, der nach einer bestimmten Anzahl von Umdrehungen, z.B. nach dem Einfädelvorgang, bei einem bestimmten Drehmoment oder eines bestimmten Drehmomentanstieges stoppt.

Der Verschließkopf weist bevorzugt Vorrichtungen, um (erstens) den Verschluss aufzunehmen, (zweitens) den Verschluss sicher während des Einfädel- und Anbringvorgangs (insbesondere Schraubvorgangs) zu halten und/oder (drittens) den Schraubvorgang abzubrechen und/oder (viertens) den Verschluss am Ende des Verschließvorgangs loszulassen. Die Vorrichtungen sind insbesondere bei jedem Verschließkopf und für unterschiedlich geformte Verschlüsse zu adaptieren.

Der Verschließvorgang, insbesondere der Anbringvorgang (Zustellen des Verschlusses zu dem Behältnis), bevorzugt der Schraubvorgang, kann mittels (Elektro-)Motor oder Servomotor verrichtet werden. Bei Erreichen eines voreingestellten Grenzdrehmoments (oder Moments) beendet der Motor den Anbringvorgang, insbesondere den Schraubvorgang. Diese Gattung von Verschließer sind als Servo-Verschließer bekannt.

Der Schraubvorgang kann mittels permanent angetriebenem (Planeten)Getriebes an allen Verschließorganen erfolgen, der Abbruch des Schraubvorgangs wird durch eine Magnetkupplung durch Auskoppeln bei einem voreingestellten Grenzdrehmoments realisiert. Es ist eine sogenannte Hysteresekupplung oder eine davon abgewandelte Variante.

Bei einem bevorzugten Verfahren weist die Verschließvorrichtung eine Vielzahl von Verschließeinheiten auf, wobei jede Verschließeinheit, insbesondere unabhängig von den übrigen Verschließeinheiten, einen Verschließvorgang eigenständig durchführen und hierin einen Verschluss an einem Behältnis anbringen kann.

Bevorzugt kann der einzelne Verschließkopf individuell geregelt werden. Unterschiede von Verschließkopf zu Verschließkopf werden vorteilhaft eliminiert.

Im Falle von Schraubverschlüssen, erfolgt die Regelung der Verschließvorrichtung und/oder einer (bevorzugt jeder) Verschließeinheit basierend auf einem (von der Vorschließvorrichtung und/oder der jeweiligen Verschließeinheit zu applizierende) Grenzdrehmoment (etwa beim Servoverschließer und/oder bei der Magnetkupplung) als Stellgröße.

Bevorzugt ist die Regelung der Verschließvorrichtung und/oder einer (insbesondere jeder) Verschließeinheit als Mehrgrößen-Regler ausgestaltet, wobei bevorzugt das Grenzdrehmoment und eine Drehzahl gesteuert werden kann.

Bevorzugt wird die Regelung basierend auf einer Fuzzy-Logik betrieben.

Dabei werden die gemäß einem der obig beschriebenen Verfahren ermittelten Dichtheitsgrö-βen denjenigen Verschließeinheiten zugeordnet, welche den betreffenden Verschließvorgang durchgeführt haben, wobei eine Steuerung und/oder Regelung des Verschließvorgangs der Vielzahl von Verschließeinheiten jeweils in Abhängigkeit der der jeweiligen Verschließeinheit zugeordneten wenigstens einen Dichtheitsgröße erfolgt. Liegen die Messgrößen organbezogen (Verschließeinheits-bezogen) vor, kann der Regler vorteilhaft für jedes Organ (Verschließeinheit) individuell die Stellgröße steuern.

Bei einem weiter bevorzugten Verfahren wird ein aktueller Zustand sowie ein Sollzustand der Verschließvorrichtung und/oder einer der Vielzahl von Verschließeinheiten erfasst wird, und in Abhängigkeit eines Vergleichs des aktuellen Zustands mit dem Sollzustand eine für eine Ausfallwahrscheinlichkeit und/oder einen Wartungsbedarf charakteristische Zustandsgröße ermittelt.

Nachteilig am Stand der Technik ist die fehlende Zustandserfassung und die damit verbundene Vorhersage der nächsten Wartung.

Der Vergleich mit einem Sollzustand ermöglicht Vorhersagen über die Verlässlichkeit zu machen. So kann ein Wartungsintervall vorgezogen oder auch zuverlässig in die Zukunft verschoben werden (Predictive Maintenance).

Der Vergleich mit einem Sollzustand ermöglicht es vorteilhaft, Aussagen über die Beschaffenheit des Verschlusskopfes zu machen.

Nach einer Überholung, Reparatur oder Tausch eines oder aller Verschließeinheiten (Verschließköpfe) müssen nicht alle Sorten neu eingestellt werden. Der personalintensive Aufwand entfällt.

Der Sollzustand kann dabei ein digitaler Zwilling (insbesondere der Verschließvorrichtung), (auf einer Speichereinrichtung abgelegte) Erfahrungswerte, das Expertenwissen, eine Steuerung, die gesammelten Vergleichswerte des Verschließers bei einwandfreiem Zustand, die an anderen Verschließern (Verschließvorrichtungen) gesammelten Vergleichswerte sein oder auf Grundlage hierauf ermittelt werden.

Bevorzugt wird zur Ermittlung der Zustandsgröße ein Unterschied zum Sollzustand erfasst und ausgewertet (von einer insbesondere Prozessor-basierten Auswertungseinrichtung). Bevorzugt wird der Unterschied mit (insbesondere auf einer Speichereinrichtung abgelegten) statistischen Grenzwerten verglichen. Bevorzugt wird eine zeitliche Veränderung (insbesondere des aktuellen Zustands und/oder eines auf Grundlage des Vergleichs gebildeten Vergleichswerts) und/oder die Veränderungsgeschwindigkeit mit Grenzwerten verglichen. Dies bietet den Vorteil, dass bei schnell voranschreitenden (negativen) Veränderungen zeitnah reagiert werden kann.

Bevorzugt wird ein Unterschied zum Sollzustand, ein wiederholtes Erreichen von Grenzwerten und/oder (vorgegebenen) Zuständen (insbesondere historisch) erfasst und (insbesondere hinsichtlich der Häufigkeit des Auftretens in einem vorgegebenen Zeitintervall) bewertet.

Bevorzugt wird auf Grundlage des historisch erfassten Verlaufs ein Gesamtzustand (und/oder die Zustandsgröße) ermittelt und bevorzugt wird eine Vorhersage für künftige Ausfallwahrscheinlichkeiten, Reparaturen und dergleichen auf Grundlage des historisch erfassten Verlaufs ermittelt.

Bei einem weiter bevorzugten Verfahren erfolgt eine Steuerung und/oder Regelung und/oder Wartung der Verschließvorrichtung in Abhängigkeit eines, insbesondere trainierbaren, Behältnisverschließ-Modells maschinellen Lernens, welches einen Satz insbesondere trainierbarer, Parameter umfasst, welche auf Werte eingestellt sind, die als Ergebnis eines Trainingsprozesses gelernt wurden, wobei der Trainingsprozess auf Grundlage eines Satzes von Trainingsdaten erfolgt ist.

Bevorzugt umfassen die Trainingsdaten wenigstens eine für eine in Bezug auf die Verschließrichtung vorliegende Relativposition des Verschlusses gegenüber dem damit versehenen Behältnis charakteristische Anbringgröße, insbesondere eine Aufschraubtiefe, sowie eine für den jeweiligen Verschließvorgang charakteristische Größe.

Bevorzugt basiert das Behältnisverschließ -Modell maschinellen Lernens auf einem (künstlichen) neuronalen Netzwerk. Bevorzugt ist das neuronale Netzwerk als tiefes neuronales Netzwerk (Deep Neural Network, DNN), bei dem die parametrierbare Verarbeitungskette eine Mehrzahl von Verarbeitungsschichten aufweist, und/oder ein sogenanntes Convolutional Neural Network (CNN) (dt. Faltungsnetzwerk) und/oder ein rekurrentes Neuronales Netzwerk (RNN, engl. Recurrent Neural Network) ausgebildet.

Bevorzugt werden dem Behältnisverschließ -Modell bzw. dem (künstlichen) neuronalen Netzwerk die (zu verarbeitenden) Daten, insbesondere Verschluss- und/oder Behältnissorten-spezifische und/oder Verschließeinheits-spezifische Dichtheitsgrößen (insbesondere eine Anbringungsgröße und/oder eine Abstandsgröße und/oder eine Einbringtiefe und/oder eine Aufschraubtiefe) (oder hiervon abgeleitete Daten), welche bevorzugt von der Inspektionsvorrichtung und/oder im Rahmen des obig beschriebenen Verfahrens zum Inspizieren von mit Verschlüssen versehenen Behältnissen ermittelt wurden, als Eingangsgrößen zugeführt. Bevorzugt bildet das Behältnisverschließ -Modell bzw. das künstliche neuronale Netzwerk die Eingangsgrößen in Abhängigkeit einer parametrierbaren Verarbeitungskette auf Ausgangsgrößen ab.

Bevorzugt ist als Ausgangsgröße wenigstens eine Stellgröße für eine Steuerung und/oder Regelung des Verschließvorgangs (der Verschließvorrichtung), bevorzugt eine für ein Anbringmoment (insbesondere (Grenz-)Drehmoment) charakteristische Größe, gewählt.

Bevorzugt sind als Ausgangsgröße für jede Verschließeinheit jeweils wenigstens eine Stellgröße für eine Steuerung und/oder Regelung des Verschließvorgangs (der Verschließeinheit), bevorzugt eine für ein Anbringmoment (insbesondere Drehmoment) charakteristische Größe, gewählt.

Bevorzugt wird/wurde das Behältnisverschließ -Modells maschinellen Lernens unter Verwendung vorgegebener Trainingsdaten trainiert, wobei durch das Training die parametrierbare Verarbeitungskette parametriert wird.

Bei einem bevorzugten Verfahren werden in dem Trainingsprozess des Behältnisverschließ - Modells Trainingsdaten verwendet, welche von der Inspektionsvorrichtung und/oder im Rahmen des Verfahrens zum Inspizieren von mit Verschlüssen versehene Behältnisse ermittelte Dichtheitsgrößen (bevorzugt Anbringungsgrößen, Einbringtiefen und/oder Aufschraubtiefen oder hierfür charakteristische Größen), bevorzugt spezifisch für ein oder mehrere Verschließeinheiten der Verschließvorrichtung, umfassen. Denkbar ist auch, dass Trainingsdaten auf Grundlage von verschiedenen (bevorzugt baugleichen) Verschließ- und/oder Inspektionsvorrichtungen ermittelten Dichtheitsgrößen verwendet werden. Dies bietet den Vorteil, dass in kurzer Zeit eine hohe Zahl an Trainingsdaten erzeugt und etwaige Fehlfunktionen der Inspektionsvorrichtung und/oder der Verschließvorrichtung entdeckt werden können.

Bevorzugt werden die zur Verwendung als Trainingsdaten vorgesehenen ermittelten Dichtheitsgrößen mit (Behältnis- und/oder Verschluss-)Sortenmerkmalen (etwa Farbe bzw. Zusammensetzung des Verschlusses) und/oder Klassifikationsmerkmalen (etwa eine vorgegebene Soll-Dichtheitsgröße, die anzeigt ob die jeweilige Dichtheitsgröße, insbesondere in Abhängigkeit der Behältnis- und/oder Verschlusssorte für eine Erfüllung der Dichtfunktion ausreicht) versehen.

Bevorzugt werden die ermittelten Dichtheitsgrößen zusammen mit den jeweils ihnen zugeordneten Behältnissorten- und/oder Verschlusssorten- und/oder für eine Verschlusszusammensetzung (Farbbeigabe, Additive, insbesondere eine Friktion beeinflussende Bestandteile) charakteristische Merkmale und/oder Klassifikationsmerkmalen als Trainingsdatensatz (insbesondere auf einer und/oder der nicht-flüchtigen Speichereinrichtung) abgelegt und/oder verwendet. Bevorzugt wird auf diese Weise eine Vielzahl von Trainings-Datensätzen erzeugt.

Durch die Variation der Anbringmomente, insbesondere der Drehmomente am Verschließer bzw. an der Verschließvorrichtung und die Korrelation zu den Aufdrehhöhen ist es theoretisch möglich eine Korrelation zwischen der Höhe des Verschlusses und/oder zwischen der obig ermittelten Dichtheitsgröße (und/oder Anbringungsgröße und/oder Einbringtiefe und/oder Aufdrehtiefe) und der Aufdrehwerte der Verschließvorrichtung (der Verschließeinheit), wie beispielsweise Servo-Verschließers zu ermitteln.

Dadurch dass zehn und mehr Verschlussköpfe bzw. Verschließeinheiten (in der Verschließvorrichtung) vorgesehen sind, kann hier bevorzugt pro Verschluss und Flaschenkombination während der Produktion eine Moment-Ermittlung auf Basis der Daten geschehen. Dies ersetzt vorteilhaft eine externe Qualitätskontrolle langfristig.

Durch die Kreuzvergleiche und die Regelung der Köpfe kann so stabiles Verschlussbild erzeugt werden unabhängig von sich evtl. ändernden Randbedingungen. Sei es Material oder Schmierung durch Wasser etc.

Bevorzugt wird ein derart trainiertes neuronales Netzwerk (als Behältnisverschließ-Modell) eingesetzt. Bevorzugt erfolgt das Training mittels überwachtem Lernen. Es wäre jedoch auch möglich, das Behältnisverschließ-Modell bzw. das Künstliche Neuronale Netz mittels unbeaufsichtigtem Lernen, bestärkendem Lernen oder stochastischem Lernen zu trainieren.

Zusätzlich oder alternativ ist möglich, dass die die Trainingsdaten wenigstens eine für einen aktuellen Zustand einer Verschließvorrichtung charakteristische Größe umfassen.

Bevorzugt werden dem Behältnisverschließ -Modell bzw. dem (künstlichen) neuronalen Netzwerk die (zu verarbeitenden) Daten, insbesondere ein erfasster aktueller Zustand der Verschließvorrichtung, bevorzugt wenigstens ein erfasster aktueller Zustand einer Verschließeinheit und besonders bevorzugt wenigstens je Verschließeinheit ein erfasster aktueller Zustand, (oder hierfür charakteristische oder hiervon abgeleitete Daten), welcher bevorzugt von der Verschließvorrichtung ermittelt wurden, als Eingangsgrößen zugeführt. Bevorzugt bildet das Behältnisverschließ -Modell bzw. das künstliche neuronale Netzwerk die Eingangsgrö-βen in Abhängigkeit einer parametrierbaren Verarbeitungskette auf Ausgangsgrößen ab.

Für einen aktuellen Zustand charakteristische Größen können (im Rahmen einer Regelung) erforderliche Stellgrößen und/oder Steuerungsgrößen sein.

Bevorzugt ist als Ausgangsgröße wenigstens eine Zustandsgröße und/oder eine für eine Wartung und/oder einen Fehlerzustand der Verschließvorrichtung charakteristische Größe gewählt.

Bevorzugt sind als Ausgangsgröße für jede Verschließeinheit jeweils wenigstens eine Zustandsgröße und/oder eine für eine Wartung und/oder einen Fehlerzustand und/oder Ausfallwahrscheinlichkeit der Verschließvorrichtung charakteristische Größe gewählt.

Bevorzugt wird/wurde das Behältnisverschließ -Modells maschinellen Lernens unter Verwendung vorgegebener Trainingsdaten trainiert, wobei durch das Training die parametrierbare Verarbeitungskette parametriert wird.

Bei einem bevorzugten Verfahren werden in dem Trainingsprozess des Behältnisverschließ - Modells Trainingsdaten verwendet, welche historisch erfasste Daten, insbesondere für Grenzwerte und/oder Zustände, Grenzwerte für ein wiederholtes Erreichen von Grenzwerten und/oder Zuständen, Grenzwerte für eine zeitliche Veränderung und/oder eine Veränderungsgeschwindigkeit von den aktuellen Zustand charakterisierenden Werten, statistische Grenzwerte und/oder Zustände von, von der Verschließvorrichtung (und/oder Inspektionsvorrichtung) verschiedenen (aber bevorzugt baugleichen) Verschließ- und/oder Inspektionsvorrichtungen umfassen. Dies bietet den Vorteil, dass in kurzer Zeit eine hohe Zahl an Trainingsdaten erzeugt und etwaige Fehlfunktionen der Inspektionsvorrichtung und/oder der Verschließvorrichtung entdeckt werden können.

Bevorzugt umfassen die Trainingsdaten als Klassifizierungsmerkmal die Information, ob der Zustand einem (störungsfreien) Regelbetrieb entspricht und/oder ob eine Fehlfunktion vorliegt und/oder ob ein (fortschreitender) Alterungszustand der Verschließvorrichtung und/oder der Inspektionsvorrichtung vorliegt.

Bevorzugt ist das Behältnisverschließ-Modell dazu geeignet und bestimmt, (in den Trainingsdaten) Abweichungen und/oder Anomalien und/oder Muster zu erkennen, welche einen Fehlerzustand und/oder Fehlfunktionen und/oder eine (fortgeschrittene) Alterung von Elementen der Verschließvorrichtung und/oder der Inspektionsvorrichtung und/oder einen Wartungsbedarf der Verschließvorrichtung und/oder der Inspektionsvorrichtung zu erkennen.

Bevorzugt gibt das Behältnisverschließ-Modell in Abhängigkeit der Eingangsgrößen einen hierfür charakteristischen Wahrscheinlichkeitswert (als Ausgangsgröße) aus.

Bevorzugt werden aufbauend auf die Messwerte und Daten oder Teile aus obig beschriebenen Sollzuständen mittels Machine Learning Methoden neuronale Regler eingesetzt. Diese können vortrainiert sein, aus Simulationen oder von anderen, ähnlichen Maschinen stammen.

Bevorzugt sind die Zustände (oder hierfür charakteristische Größen) von und/oder über einen externen Server, insbesondere eine Cloud, abrufbar und/oder erfassbar.

Die Anbindung der Messwerte und Daten verschiedenster Verschließer an eine Cloud ermöglicht viele Zustände aus verschiedenen Standorten zu sammeln und mit den gesammelten Informationen schneller und oder bessere neuronale Regler zu entwickeln.

Aufbauend auf die Kl und Machine Learning Methoden kann eine sichere Predictive Maintenence ermittelt werden.

Die gesammelten Zustände, Messwerte und Daten ermöglichen es Serienfehler oder Schwachstellen automatisch zu erkennen und im Maschinenlebenszyklus im kontinuierlichen Verbesserungsprozess zukünftig zu vermeiden.

Die vorliegende Erfindung ist weiterhin gerichtet auf eine Inspektionsvorrichtung zum Inspizieren von mit Verschlüssen versehenen Behältnissen zur Überprüfung einer Dichtfunktion zwischen dem Verschluss und einem damit versehenen Behältnis. Dabei ist bevorzugt der Verschluss durch Anordnen (bzw. durch Zustellen des Verschlusses auf das Behältnis) in Verschließrichtung an einem Mündungsbereich des Behältnisses angeordnet.

Die Inspektionsvorrichtung weist eine Transporteinrichtung zum Transportieren der mit Verschlüssen versehenen Behältnisse entlang eines vorgegebenen Transportpfads auf.

Die Inspektionsvorrichtung weist bevorzugt eine Beleuchtungseinrichtung zur wenigstens bereichsweisen Beleuchtung der mit den Verschlüssen versehenen Behältnisse während dieses Transports auf.

Die Inspektionsvorrichtung weist wenigstens eine Bildaufnahmeeinrichtung zur Bildaufnahme wenigstens eines ortsaufgelösten Bildes des zu inspizierenden, mit dem Verschluss (10a) versehenen Behältnisses auf.

Erfindungsgemäß ist die Inspektionsvorrichtung zur Überprüfung der Dichtfunktion geeignet, bestimmt und/oder konfiguriert, dass von der wenigstens einen Bildaufnahmeeinrichtung das wenigstens eine ortsaufgelöste Bild derart aufgenommen wird, dass hierdurch eine in Verschließrichtung betrachtete Relativposition des Verschlusses gegenüber dem damit versehenen Behältnis, insbesondere ein in Verschließrichtung betrachteten Abstand zwischen dem Verschluss und dem Behältnis, abgebildet wird.

Die Inspektionsvorrichtung weist erfindungsgemäß eine, insbesondere Prozessor-basierte, Bildauswerteeinrichtung (insbesondere der Inspektionsvorrichtung, wobei die Bildauswerteeinrichtung bevorzugt fest mit der Inspektionsvorrichtung verbunden ist) auf, welche auf Grundlage der in dem wenigstens einen ortsaufgelösten Bild abgebildeten Relativposition wenigstens eine für eine Erfüllung der Dichtfunktion charakteristische Dichtheitsgröße ermittelt.

Es wird also auch im Rahmen der erfindungsgemäßen Vorrichtung vorgeschlagen, dass anstelle einer Ermittlung einer relativen Drehposition des Verschlusses gegenüber dem (hierzu markierten) Behältnis eine Ermittlung einer relativen Längsposition (entlang der Verschlussrichtung und/oder Längsrichtung des Behältnisses) vorgenommen wird.

Die Inspektionsvorrichtung kann dabei dazu konfiguriert, geeignet und/oder bestimmt sein, alle obig im Zusammenhang mit dem Verfahren zum Inspizieren von mit Verschlüssen versehenen Behältnissen beschriebenen Verfahrensschritte bzw. Merkmale einzeln oder in Kombination miteinander auszuführen. Umgekehrt kann das obig beschriebene Verfahren, insbesondere kann die im Rahmen des Verfahrens beschriebene Vorrichtung zum Inspizieren von mit Verschlüssen versehenen Behältnissen, alle im Zusammenhang mit der Inspektionsvorrichtung beschriebenen Merkmale einzeln oder in Kombination miteinander aufweisen und/oder verwenden.

Bevorzugt handelt es sich bei der Transporteinrichtung um ein Transportband, insbesondere ein Transportband, auf welchem die zu inspizierenden Behältnisse stehend sowie einbahnig transportiert werden. Dabei weist dieses Transportband besonders bevorzugt Führungseinrichtungen auf, welche die Transportbewegung und/oder die Behältnisse während ihres Transports führen. Diese Führungseinrichtungen können dabei insbesondere ein seitliches Verschieben des Behältnisses auf dem Transportband verhindern.

Bevorzugt ist die Bildaufnahmeeinrichtung ausgewählt aus einer Gruppe, die eine (insbesondere im optisch sichtbaren Bereich erfassende) Kamera, einen CMOS-Sensor (CMOS Abk. für Complementary metal-oxide-semiconductor, engl. für "komplementärer / sich ergänzender Metall-Oxid-Halbleiter), einen 3D-Sensor, eine Bildaufnahmeeinrichtung auf Röntgen-Basis, , ein optisches Element, eine Wärmebildkamera und dergleichen sowie Kombinationen umfasst.

Besonders bevorzugt weist die Inspektionsvorrichtung wenigstens zwei, bevorzugt wenigstens drei und bevorzugt wenigstens vier Bildaufnahmeeinrichtungen auf. Bevorzugt sind diese Bildaufnahmeeinrichtungen jeweils auf die Mündungen und/oder die Verschlüsse der Behältnisse ausgerichtet. Daneben wäre jedoch eine Aufnahme auch unter Verwendung von Spiegeln ggf. mit der gleichen Bildaufnahmeeinrichtung möglich.

Besonders bevorzugt ist die Bildauswerteeinrichtung zu Kontrasterhöhung eines aufgenommenen Bildes geeignet und bestimmt. Hierbei wird beispielsweise eine Vorverarbeitung eines aufgenommenen Bildes vorgenommen, um dessen Kontraste zu erhöhen.

Die Erfindung ist weiter gerichtet auf eine Verschließvorrichtung zum Verschließen von Behältnissen mit Verschlüssen, wobei die Behältnisse mittels einer Transporteinrichtung entlang eines vorgegebenen Transportpfads transportiert werden.

Bevorzugt befindet sich die Bildauswerteeinrichtung stromabwärts der Verschließvorrichtung.

Erfindungsgemäß ist die Verschließvorrichtung dazu geeignet und bestimmt, wenigstens eine gemäß einem der obig beschriebenen Verfahren zur Inspektion von mit Verschlüssen von Behältnissen ermittelte Dichtheitsgröße zu erfassen und in Abhängigkeit dieser wenigstens einen Dichtheitsgröße eine Steuerung und/oder eine Regelung des Verschließvorgangs durchzuführen.

Die Verschließvorrichtung kann dabei dazu konfiguriert, geeignet und/oder bestimmt sein, alle obig im Zusammenhang mit dem Verfahren zum Betreiben einer Verschließvorrichtung beschriebenen Verfahrensschritte bzw. Merkmale einzeln oder in Kombination miteinander auszuführen. Umgekehrt kann das obig beschriebene Verfahren, insbesondere kann die im Rahmen des Verfahrens beschriebene Vorrichtung zum Betreiben einer Verschließvorrichtung alle im Zusammenhang mit der Inspektionsvorrichtung beschriebenen Merkmale einzeln oder in Kombination miteinander aufweisen und/oder verwenden.

Bevorzugt handelt es sich dem externen Server um einen Cloud-basierten externen Server, wobei auf den Server insbesondere über das Internet (und/oder über ein, insbesondere wenigstens abschnittsweise drahtgebundenes und/oder drahtloses, öffentliches und/oder privates Netzwerk) (insbesondere von der Verschließvorrichtung) zugegriffen wird. Unter einem externen Server ist insbesondere ein in Bezug auf die Verschließvorrichtung externer Server, insbesondere ein Backend-Server, zu verstehen.

Der externe Server ist beispielsweise ein Backend insbesondere eines Verschließvorrichtungs- und/oder Inspektionsvorrichtungs-Herstellers oder eines Dienstanbieters. Die Funktionen des Backend bzw. des externen Servers können dabei auf (externen) Serverfarmen durchgeführt werden. Beim (externen) Server kann es sich um ein verteiltes System handeln.

Die Erfindung ist weiter gerichtet auf eine Anlage zum Verschließen von Behältnissen umfassend eine obig beschriebene Verschließvorrichtung (gemäß einer bevorzugten Ausführungsform) und (insbesondere in Richtung des Transportstroms dieser nachfolgend angeordnete) eine obig beschriebene Inspektionsvorrichtung (gemäß einer bevorzugten Ausführungsform). Bevorzugt weisen die Verschließvorrichtung und die Inspektionsvorrichtung eine zum Echtzeit-Datenaustausch zwischen einander geeignete Kommunikationseinrichtung aus.

Weitere Vorteile und Ausführungsformen ergeben sich aus den beigefügten Zeichnungen: Darin zeigen:
- Fig. 1: eine Darstellung zur Veranschaulichung der der Erfindung zugrundeliegenden Gegebenheiten;
- Fig. 2: eine grob schematische Darstellung einer Vorrichtung zum Inspizieren von Behältnissen;
- Fig. 3a: eine Darstellung einer erfindungsgemäßen Inspektionsvorrichtung in einer weiteren Ausführungsform;
- Fig. 3b: eine schematische Draufsicht auf eine bevorzugte Anordnung von vier Bildaufnahmeeinrichtungen in einer erfindungsgemäßen Inspektionsvorrichtung in einer weiteren Ausführungsform;
- Fig. 3c: eine Querschnittsdarstellung einer erfindungsgemäßen Inspektionsvorrichtung in einer weiteren Ausführungsform;
- Fig. 4: eine Darstellung eines an einem Mündungsbereich eines Behältnisses angeordneten Verschlusses zur Veranschaulichung der der Erfindung zugrundeliegenden Gegebenheiten;
- Fig. 5: eine ausschnittsweise Schnittdarstellung eines an einem Mündungsbereich eines Behältnisses angeordneten Verschlusses zur Veranschaulichung der der Erfindung zugrundeliegenden Gegebenheiten;
- Fig. 6: eine Darstellung eines Vorformlings zur Veranschaulichung der der Erfindung zugrundeliegenden Gegebenheiten;
- Fig. 7: eine Darstellung eines beispielhaften Verschlusses mit an diesem vorhandenen Merkmalen;
- Fig. 8: eine schematische Darstellung eines Regelkreises zur Regelung einer erfindungsgemäßen Verschließvorrichtung gemäß einer bevorzugten Ausführungsform;
- Fig. 9a, 9b: ein Histogramm zur Darstellung einer Auswertung organbezogener Daten in Bezug auf den Mittelwert (Fig. 9a) und die Standardabweichung (Fig. 9b) von sich aus einer Höhenkontrolle von Verschlüssen ergebenden Messewerten;
- Fig. 10: zeigt eine Darstellung aus dem Stand der Technik bekannter Verschlüsse.

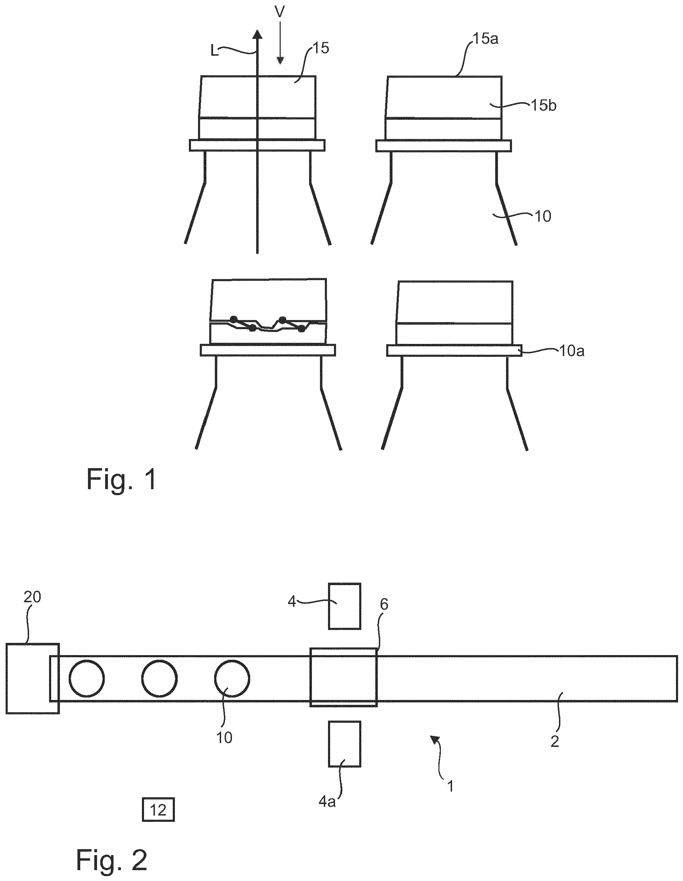

Fig. 1 zeigt vier Darstellungen eines Behältnisses, hier eines Kunststoffbehältnisses 10 mit einem (Behältnis-)Verschluss 15. Bevorzugt ist dieser (Behältnis-)Verschluss 15 auf eine Mündung, insbesondere ein Mundstück, des Behältnisses 10 aufgeschraubt.

Das Bezugszeichen L bezieht sich auf eine Längsrichtung des Behältnisses sowie auch auf eine Längsrichtung des Behältnisverschlusses 15.

Das Bezugszeichen V kennzeichnet einen die Verschließrichtung anzeigenden Pfeil. In dieser Verschließrichtung wird der Verschluss beim Anbringen des Verschlusses 15 auf dem Behältnis 10 bzw. beim Zustellen des Verschlusses 15 zum Behältnis (während des Verschließvorgangs) bewegt. Im Falle von Schraubverschlüssen wird der Verschluss gleichzeitig zu dieser linearen Bewegung um die Verschließrichtung gedreht, um diesen an einem auf dem Mündungsbereich (bzw. der Mündung) des Behältnisses ausgeprägten Gewinde, aufzuschrauben.

Hier erstreckt sich die Verschließrichtung entlang der Längsrichtung L (mit entgegenbesetzter Richtung). Bevorzugt verläuft die Verschließrichtung V und/oder die Längsrichtung entlang einer Mittelachse des Behältnisses (durch den Grundkörper und/oder den Bodenbereich). Bevorzugt verläuft die Verschließrichtung V und/oder die Längsrichtung entlang einer Mittelachse einer mit dem Verschluss zu verschließenden Öffnung des Behältnisses und/oder entlang einer Mittelachse eines mit dem Verschluss 15 zu verschließenden Mündungsbereichs des Behältnisses 10.

Der Behältnisverschluss weist einen Deckelabschnitt 15a sowie eine Umfangswandung 15b auf. An der Umfangswandung 15b kann eine Struktur ausgebildet sein (nicht gezeigt).

Das Bezugszeichen 10a bezieht sich auf einen an dem Behältnis 10 angeordneten Tragring. Dieser wird, bevorzugt, ebenso mit aufgenommen.

Fig. 2 zeigt eine grob schematische Darstellung einer erfindungsgemäßen Vorrichtung 1 zum Inspizieren von Behältnissen 10 gemäß einer bevorzugten Ausführungsform. Diese Vorrichtung weist eine Transporteinrichtung wie etwa ein Transportband 2 auf, welches die Behältnisse 10 entlang eines vorgegebenen Transportpfads, hier eines geradlinigen Transportpfads transportiert.

Die Bezugszeichen 4 und 4a beziehen sich auf (hier zwei, bevorzugt ca. 180° zueinander angeordnete) Bildaufnahmeeinrichtungen, welche jeweils Bilder der befüllten und verschlossenen Behältnisse 10 aufnehmen. Vorteilhaft sind vier (ca. 90° zueinander angeordneter) solcher Bildaufnahmeeinrichtungen 4, 4a vorgesehen (von welchen in Fig. 2 nur zwei dargestellt sind), welche besonders bevorzugt insgesamt jeweils vier Bilder der Behältnisse aus unterschiedlichen Richtungen aufnehmen.

Die Bezugszeichen 6 beziehen sich auf Beleuchtungseinrichtungen, welche bevorzugt den Bildaufnahmeeinrichtungen zugeordnet sind und welche die Behältnisse 10 zumindest während der Bildaufnahme beleuchten.

Das Bezugszeichen 12 kennzeichnet schematische eine Bildauswerteeinrichtung, welche die von der oder den Bildaufnahmeeinrichtungen aufgenommenen Bilder auswertet und dabei bevorzugt auch die oben beschriebene Dichtheitsgröße ermittelt.

Das Bezugszeichen 20 kennzeichnet einen stromaufwärts der Transportrichtung an der Transporteinrichtung 2 angeordnete Verschließvorrichtung zum Verschließen der Behältnisse 10 mit Verschlüssen.

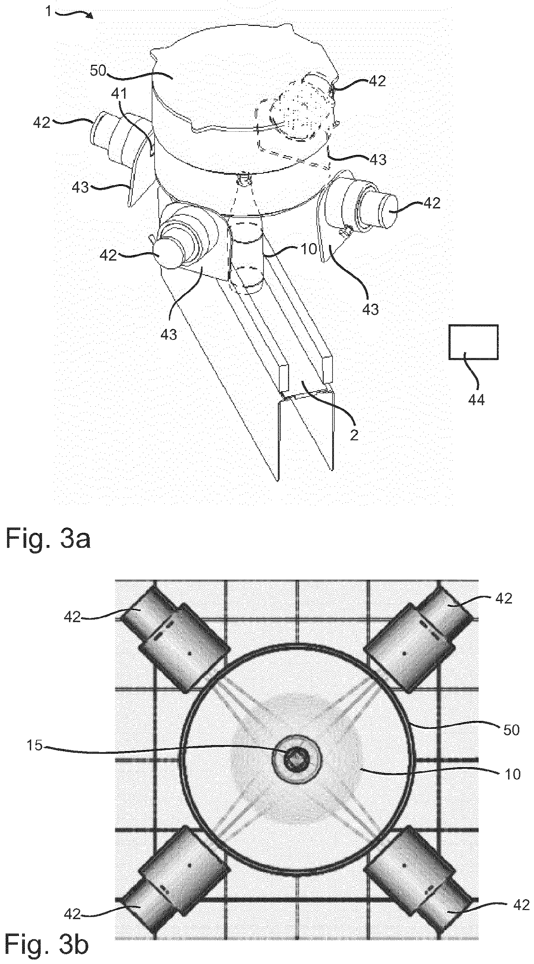

Fig. 3a zeigt eine Inspektionsvorrichtung 1 zum Inspizieren von mit Verschlüssen versehenen Behältnissen 10 gemäß einer bevorzugten Ausführungsform. Das Bezugszeichen 2 kennzeichnet dabei eine Transporteinrichtung, welche die zu inspizierenden Behältnisse 10 entlang eines (vorgegebenen) Transportpfads zur Inspektionsvorrichtung 1 führt, durch diese durch führt und hier von dieser abführt.

Die Inspektionsvorrichtung kann dabei eine oder mehrere Bildaufnahmeeinrichtungen 42, wie etwa Kameras, aufweisen. Beispielsweise könnten - wie in Fig. 3a dargestellt - vier Bildaufnahmeeinrichtungen angeordnet sein.

Die hier in Fig. 3a gezeigten dünnen (bevorzugt weißen) Scheiben 43 um das (kleine) Objektivloch 41 herum ist der jeweilige Hintergrund für die gegenüberliegende Bildaufnahmeeinrichtung 42, welche hier als Kamera ausgestaltet ist, (und diffuses Streuelement 43). Dass die jeweilig gegenüberliegende Kamera nicht das schwarze Loch 41 in der näheren Umgebung des Verschlussdeckels 15a sieht, ist der Kamerawinkel von 15°-30° gewählt worden.

Die Bildaufnahmeeinrichtungen 42 können derart angeordnet sein, dass mehrere oder alle dieser Bildaufnahmeeinrichtungen 42 jeweils wenigstens ein Bild des zu inspizierenden Behältnisses 10 aufnehmen, während sich dieses im Wesentlichen in wenigstens einer Inspektionsposition befindet oder während sich dieses in einem (fest) vorgegebenen Inspektionsbereich befindet. Bevorzugt ist das zu inspizierende Behältnis während der Aufnahme des Bildes durch die Bildaufnahmeeinrichtung(en) 42 in (Transport-)Bewegung. Bevorzugt wird die Transportgeschwindigkeit des zu inspizierenden Behältnisses 10 zur Bildaufnahme nicht oder nicht wesentlich reduziert und insbesondere wird das Behältnis hierzu auch nicht angehalten.

Weiterhin weist die Inspektionsvorrichtung 1 eine, insbesondere Prozessor-basierte, Bildauswerteeinrichtung 44 auf.

Die Inspektionsvorrichtung 1 kann weiterhin wenigstens eine (oder mehrere) Beleuchtungseinrichtung(-en) 50 zur Beleuchtung des zu inspizierenden Behältnisses aufweisen. Bevorzugt ist genau eine Beleuchtungseinrichtung 50 vorgesehen, die (senkrecht) oberhalb des Behältnisses und oberhalb der Transporteinrichtung 2 angeordnet ist. Bevorzugt ist die Hauptbeleuchtungsrichtung der Beleuchtungseinrichtung senkrecht zur Transportrichtung und besonders bevorzugt parallel zur Längsrichtung des Behältnisses (welches bevorzugt stehend und/oder einbahnig auf der Transporteinrichtung 2 transportiert wird).

Fig. 3b zeigt eine schematische Draufsicht auf eine bevorzugte Anordnung von vier Bildaufnahmeeinrichtungen 42, hier ausgestaltet als Kameras, einer Inspektionsvorrichtung 1, welche im 90°-Winkel zueinander angeordnet sind und jeweils ein, insbesondere dasselbe, (zu inspizierendes) Behältnis 10 inspizieren. Das Bezugszeichen 50 kennzeichnet eine in Draufsicht kreisförmige Beleuchtungseinrichtung und/oder Leuchtschirm, welche(r) oberhalb der Bildaufnahmeeinrichtungen 42 angeordnet ist.

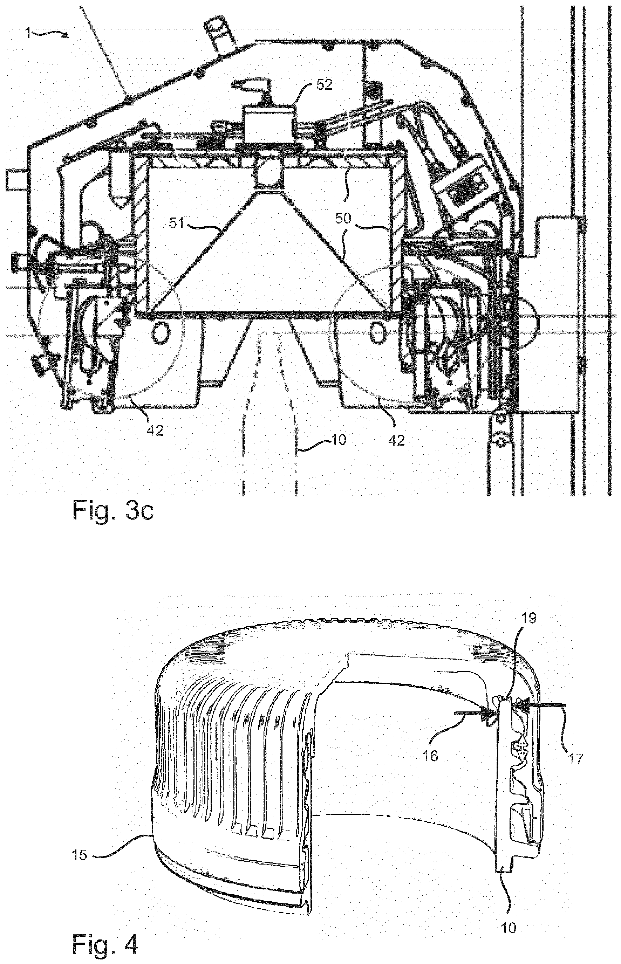

Fig. 3c zeigt eine Querschnittsdarstellung einer erfindungsgemäßen Inspektionsvorrichtung in einer weiteren Ausführungsform. Das Bezugszeichen 10 kennzeichnet wiederum ein Behältnis, welches mit einem Verschluss versehen ist. Die mit dem Bezugszeichen 42 gekennzeichneten Kreise zeigen die Lage der Bildaufnahmeeinrichtungen (Kameras) an (zu sehen sind zwei seitliche Kameras von bevorzugten vier Kameras), welche jeweils ein Bild von einem Behältnis- und/oder Verschlussbereich aufnehmen.

Zur Inspektion wird das Behältnis 10 (sowie dessen Verschluss) von einer Beleuchtungseinrichtung, bevorzugt über eine diffuse Auflichtbeleuchtung, beleuchtet. Beleuchtungsort ist bevorzugt über dem Verschluss.

Bevorzugt ist der Beleuchtungs-Durchmesser > 150 mm, bevorzugt >220 mm, besonders bevorzugt >280 mm gewählt.

Bevorzugt gilt für die Beleuchtungsrichtung: diffus von oben, so dass der Verschluss und die Behältergeometrie (Tragring, Schulter, ...) gleichermaßen beleuchtet wird. Licht von oben erzeugt Glanzstellen an den Hervorhebungen, Schatten an den Vertiefungen, Licht von weiter außen die gleichmäßige Grundbeleuchtung.

Die Lampenfläche (der Beleuchtungseinrichtung) ist besonders bevorzugt ein kegelförmiger Leuchtschirm 51. Bevorzugt ist in der Kegelmitte eine weitere Kamera (oder Bildaufnahmeeinrichtung) 52angeordnet sein, welche den Verschlussdeckel auf z.B. ein korrektes Label (etwa ein Label des Getränkeherstellers) überprüft. Denkbar ist aber auch, dass die Inspektionsvorrichtung keine Kamera in der Kegelmitte aufweist.

Der Leuchtschirm kann (auch besonders) bevorzugt eine flache Scheibe sein (bevorzugt wenn die weitere Kamera nicht berücksichtigt wird).

Fig. 4 zeigt eine Darstellung eines an einem Mündungsbereich eines Behältnisses angeordneten Verschlusses zur Veranschaulichung der der Erfindung zugrundeliegenden Gegebenheiten.

Fig. 4 zeigt einen für insbesondere abzufüllende Produkte mit einem hohen Kohlensäuregehalt entwickelten Verschluss 15, welcher gegenüber dem Mündungsbereich des Behältnisses dicht abschließt und sicher geöffnet werden kann. Der hier dargestellte Verschluss 15 weist zwei (drei) Dichtungen, die mit den Bezugszeichen 16 und 17 (19) gekennzeichnet sind, auf: eine an der Innenseite und eine an der Außenseite, um kleinere Schäden am Hals zu vermeiden.

Die aus dem Stand der Technik bekannten, zur Bestimmung einer Drehposition an dem Verschluss und/oder Tragring vorgesehenen Markierungen sind im eigentlichen Sinne Behelfsmarkierungen, um schlussendlich den Abstand zwischen Verschluss und Stirnfläche des Mundstücks vermessen zu können. Die Dichtfunktion zwischen Verschluss und Mundstück ist gewährleistet, wenn der Verschluss mit seinen Dichtlippen am oberen Ende des Mundstücks eintaucht, was durch die mit den Bezugszeichen 16 und 17 gekennzeichneten Pfeilen veranschaulicht ist.

Die indirekte Messgröße Verschlussdrehwinkel für den Abstand zwischen Verschluss und Stirnfläche des Mundstücks wird bevorzugt durch eine echte Abstandsmessung zwischen den steifen Mundstückpartien und dem Verschluss ersetzt.

Warum sind es Behelfsmarkierungen. Ziel des Winkels ist es, die Aufschraubtiefe festzustellen. Die Winkelposition wiederholt sich beim Aufschrauben bei jeder Umdrehung. Typischerweise hat ein einteiliges Gewinde eine Steigung von ca. 1,5 - 3,5 mm, je nach Ausführung. Beispielhaft wird eine Steigung von 1,8 mm angenommen. D.h. eine Umdrehung ändert den Verschlussabstand um 1,8 mm. Ist die Dichtfunktion innerhalb einer Abstandstoleranz von 0,3 mm zwischen Mundstück und Verschluss gegeben, kann auf eine zulässige Winkeltoleranz umgerechnet werden. Im Beispiel sind es 0,3 mm / 1,8 mm x 360° = 60°. Aber der Winkel ist indirekt über die Gewindesteigung eben nur eine Behelfsgröße. Die zu bestimmende Größe ist, ob die Dichtfunktion im Verschluss tief genug auf dem Mundstück sitzt.

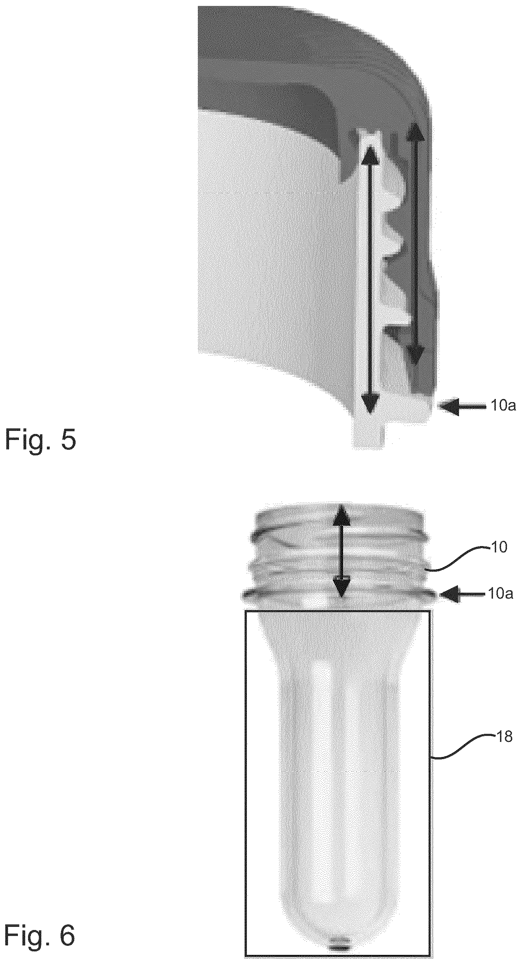

Fig. 5 zeigt eine ausschnittsweise Schnittdarstellung eines an einem Mündungsbereich eines Behältnisses 10 angeordneten Verschlusses 15 zur Veranschaulichung der der Erfindung zugrundeliegenden Gegebenheiten.

An diesem in Fig. 5 gezeigten Beispiel eines auf dem Mündungsbereich angeordneten Verschlusses ist bereits eine Ausführung zu sehen, bei der der Tragering 10a nicht über den Verschluss hinausragt. Eine Markierung auf dem Tragering kann nicht mehr gleichzeitig mit einer am Verschluss angebrachten Markierung von oben oder seitlich oben messtechnisch erfasst werden.

Fig. 6 zeigt eine Darstellung eines Vorformlings, aus welchem durch einen Blasformprozess ein fertig geblasenes, zu befüllendes (und im Anschluss zu verschließendes) Behältnis entsteht, zur Veranschaulichung der der Erfindung zugrundeliegenden Gegebenheiten.

Das Mundstück ist bis zum Tragering steif ausgeführt. Unterhalb des Tragerings beginnt der zu verstreckende Teil. Dieser Teilbereich des Preforms, welcher hier durch ein mit dem Bezugszeichen 18 gekennzeichneten Rechteck veranschaulicht wird, wird bei der Herstellung eines PET Behälters zur Behälterform geformt.

Deshalb wird bevorzugt vorgeschlagen, den Tragring 10a, die Tragringunterseite, die Tragringaußenkante, den Knick zwischen Tragring und dem verstreckbaren bzw. dem verstreckten Bereich in seiner Position zu bestimmen.

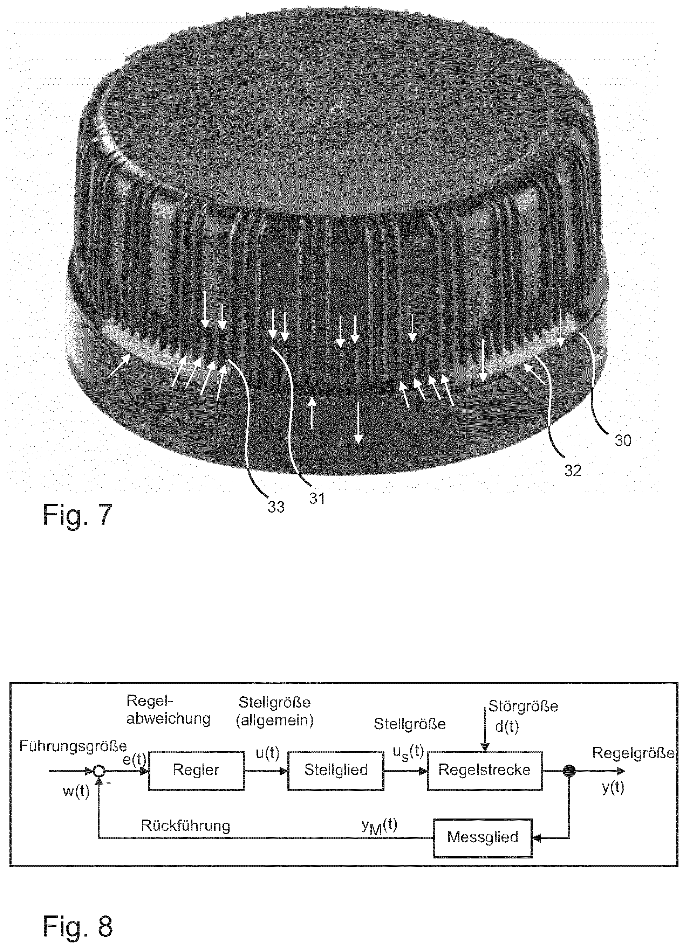

Fig. 7 zeigt eine Darstellung eines beispielhaften Verschlusses 15 mit an diesem vorhandenen (äußeren) Merkmalen, mittels welcher bevorzugt das vorgeschlagene Verfahren gemäß einer bevorzugten Ausführungsform durchführbar ist.

Es wird bevorzugt vorgeschlagen, die Positionen durch äußere Merkmale am Verschluss 15 als auch am Mundstück des Behältnisses abseits der speziellen Markierungen des Verschlussdrehwinkels zu bestimmen.

Besonders bevorzugt wird vorgeschlagen, den Verschluss, die Mantelfläche des Verschlusses, besonders bevorzugt Merkmale auf dem Verschluss und besonders bevorzugt auf der Mantelfläche angeordnete Merkmale, insbesondere seitlich am Verschluss, zur Positionsbestimmung heranzuziehen.

Merkmale können z.B. sein, die Rändelstrukturen, Vorsprünge 31, der Perforationsbereich 30 als Grenze zum Sicherungsring, Knicke 32, Rillen 33 und dergleichen. Die kleinen Pfeile in Fig. 7 veranschaulichen mögliche Merkmale.

Bevorzugt sind die Merkmale zum steif ausgebildeten Bereich genügend fest verbunden.

Fig. 8 zeigt eine schematische Darstellung eines Regelkreises zur Regelung einer erfindungsgemäßen Verschließvorrichtung gemäß einer bevorzugten Ausführungsform.

Bevorzugt weist eine Ausführungsform der Verschließvorrichtung einen (eingerichteten) Regelkreis (zur Regelung wenigstens einer für den Verschließvorgang charakteristischen Größe) auf.

Der Regelkreis kann als klassischer PID Regler ausgeführt sein, mit den drei Anteilen, dem P = proportionalen, dem I = integralen und D = differenziellen Anteil. Unterausführungen davon sind die Kombinationen aus ein oder zwei Komponenten davon. Am bekanntesten sind P Regler, PI Regler und PD Regler.

Der Regelkreis kann als Stellgröße z.B. das Grenzdrehmoment beim Servoverschließer regeln.

Der Regelkreis kann als Stellgröße z.B. das Grenzdrehmoment der Magnetkupplung regeln. Der Regelkreis kann als Mehrgrößen-Regler z.B. das Grenzdrehmoment und die Drehzahl steuern.

Liegen die Messgrößen Organ-bezogen vor, kann der Regler für jedes Organ individuell die Stellgröße steuern.

Der Regelkreis kann mit dem Prinzip der Fuzzy Logik betrieben werden.

Bevorzugt wird der Regelkreis mit einem Sollzustand verglichen. Der Sollzustand kann ein digitaler Zwilling, die Erfahrungswerte, das Expertenwissen, eine Steuerung, die gesammelten Vergleichswerte des Verschließers bei einwandfreiem Zustand und/oder die an anderen Verschließern bzw. Verschließvorrichtungen gesammelten Vergleichswerte sein.

Bevorzugt wird der Unterschied zum Sollzustand erfasst und ausgewertet.

Bevorzugt der Unterschied mit statischen Grenzwerten verglichen.

Bevorzugt wird die zeitliche Veränderung, die Veränderungsgeschwindigkeit mit Grenzwerten verglichen.

Bevorzugt wird der Unterschied zum Sollzustand, das wiederholte Erreichen von Grenzwerten/Zuständen historisch erfasst und bewertet.

Bevorzugt wird aus dem historisch erfassten Verlauf ein Gesamtzustand ermittelt und eine Vorhersage für künftige Ausfallwahrscheinlichkeiten, Reparaturen und dergleichen abgeschätzt.

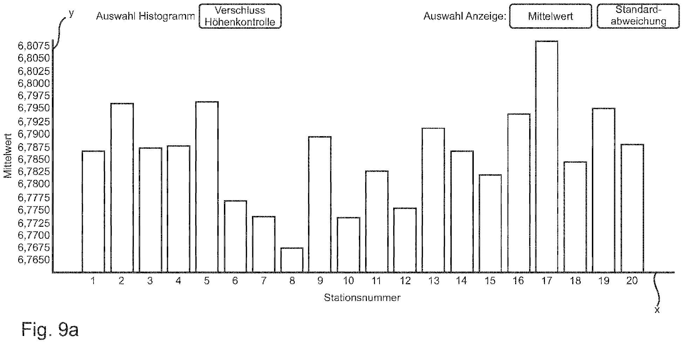

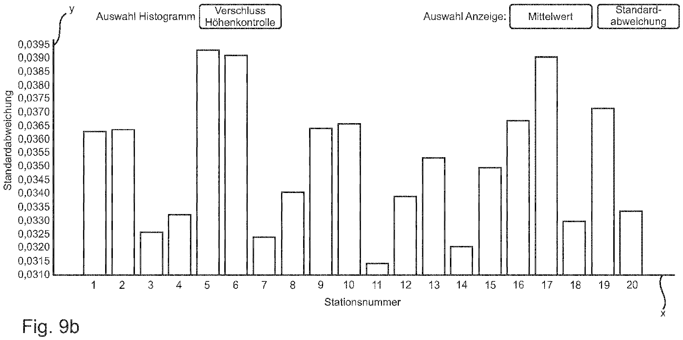

Fig. 9 zeigt ein Histogramm zur Darstellung einer Auswertung organbezogener Daten in Bezug auf den Mittelwert (Fig. 9a) und die Standardabweichung (Fig. 9b) von sich aus einer Höhenkontrolle von Verschlüssen ergebenden Messewerten. Dabei ist entlang der mit dem Bezugszeichen x gekennzeichneten Achse die jeweilige Stationsnummer (der Verschließeinheit) aufgetragen und entlang der mit y gekennzeichneten vertikalen Achse der jeweiligen Station zugeordnete Mittelwert der sich aus der Höhenkontrolle ergebenden, der jeweiligen Station zugeordneten Messwerte (Fig. 9a) und in Fig. 9b die der jeweiligen Station zugeordnete Standardabweichung der sich aus der Höhenkontrolle ergebende, der jeweiligen Station zugeordneten Messwerte.

Die (von der Inspektionsvorrichtung an die Verschließvorrichtung) rückgekoppelten Messgrö-βen, wie beispielsweise die sich aus der Höhenkontrolle ergebenden Messwerte und/oder wie die von der Inspektionsvorrichtung ermittelten (jeweiligen) Dichtheitsgrößen, und/oder Unterschiede und/oder Zustände, ab jetzt als Daten bezeichnet, können als Summe bezogen auf alle Verschließköpfe gesammelt werden. Sie können ebenso individuell für jeden einzelnen Verschließkopf bzw. Verschließeinheit (= ein Organ) aufbereitet werden (Organzuordnung).

Deshalb wird bevorzugt vorgeschlagen, die Daten als Gesamtheit, als auch Organbezogen zu organisieren. Die Daten für n Verschließköpfe können beispielsweise einzeln vorliegen und aus den organbezogenen Werten die Gesamtheit ermittelt werden.

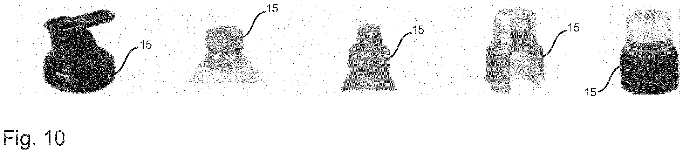

Fig. 10 zeigt eine Darstellung aus dem Stand der Technik bekannter Verschlüsse 15, mittels welchen beispielsweise das erfindungsgemäß vorgeschlagene Verfahren zur Inspektion der auf Behältnissen angeordneten Verschlüsse durchführbar ist. Insbesondere können mehrteilige Gewinde sicher verarbeitet werden. Die Mehrdeutigkeit des Verschließwinkels entfällt.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Inspektionsvorrichtung
- 2: Transporteinrichtung
- 4, 4a: Bildaufnahmeeinrichtung
- 6: Beleuchtungseinrichtung
- 10: Behältnis
- 10a: Tragring
- 12: Bildauswerteeinrichtung
- 15: Verschluss
- 15a: Deckelabschnitt
- 15b: Umfangswandung
- 15c: Sicherungsring
- 16, 17, 19: Dichtungen
- 18: zu formender Teilbereich des Preforms
- 20: Verschließvorrichtung
- 30: Perforationsbereich
- 31: Vorsprünge
- 32: Knicke
- 33: Rillen
- 44: Bildauswertevorrichtung
- 50: Beleuchtungseinrichtung
- 51: kegelförmiger Leuchtschirm

- L: Längsrichtung
- V: Verschließrichtung
- x: Achse zur Auftragung der Stationsnummer
- y: Mittelwert/Standardabweichung der der jeweiligen Station zugeordneten Messwerte

## Patentansprüche

1. Verfahren zum Inspizieren von mit Verschlüssen (15) versehenen Behältnissen (10) zur Überprüfung einer Dichtfunktion zwischen dem Verschluss und einem damit versehenen Behältnis (10), wobei der Verschluss (15) durch Anordnen in einer Verschließrichtung (V) an einem Mündungsbereich des Behältnisses (10) angeordnet ist, wobei die Behältnisse (10) mittels einer Transporteinrichtung (2) entlang eines vorgegebenen Transportpfads transportiert werden und während dieses Transports die mit den Verschlüssen (15) versehenen Behältnisse von einer Beleuchtungseinrichtung (6) wenigstens bereichsweise beleuchtet werden und wenigstens eine Bildaufnahmeeinrichtung (4) wenigstens ein ortsaufgelöstes Bild des zu inspizierenden, mit dem Verschluss (10a) versehenen Behältnisses (10) aufnimmt,
**dadurch gekennzeichnet, dass**
zur Überprüfung der Dichtfunktion von der wenigstens einen Bildaufnahmeeinrichtung (4) das wenigstens eine ortsaufgelöste Bild derart aufgenommen wird, dass hierdurch eine in Verschließrichtung (V) betrachtete Relativposition des Verschlusses (15) gegenüber dem damit versehenen Behältnis (10), insbesondere ein in Verschließrichtung (V) betrachteten Abstand zwischen dem Verschluss (15) und dem Behältnis (10), abgebildet wird, und eine Bildauswerteeinrichtung auf Grundlage der in dem wenigstens einen ortsaufgelösten Bild abgebildeten Relativposition wenigstens eine für eine Erfüllung der Dichtfunktion charakteristische Dichtheitsgröße ermittelt.

2. Verfahren nach Anspruch 1,
**dadurch gekennzeichnet, dass**
die ermittelte Dichtheitsgröße für einen, insbesondere maximalen, Abstand zwischen einem zur Erfüllung der Dichtfunktion vorgesehenen Dichtbereichs an dem Verschluss (16, 17, 19), und einem zur Erfüllung der Dichtfunktion vorgesehenen, korrespondierenden Dichtbereich an dem Behältnis, insbesondere einer Stirnfläche eines Mündungsbereichs des Behältnisses (10) charakteristisch ist.

3. Verfahren nach einem der vorangegangenen Ansprüche,
**dadurch gekennzeichnet, dass**
es sich bei der Relativposition des Verschlusses gegenüber dem damit versehenen Behältnis um eine Relativposition eines zur Erfüllung der Verschließfunktion in Verschließrichtung (V) steif ausgebildeten Bereichs des Verschlusses oder eines hiermit in Verschließrichtung (V) positionsfest verbundenen Merkmals gegenüber dem Behältnis handelt, und/oder dass es sich um eine Relativposition des Verschlusses gegenüber einem zur Erfüllung der Verschließfunktion in Verschließrichtung (V) steif ausgebildeten Bereichs des Behältnisses oder einem hiermit in Verschließrichtung (V) positionsfest verbundenen Merkmal handelt.

4. Verfahren nach einem der vorangegangenen Ansprüche,
**dadurch gekennzeichnet, dass**
die Relativposition eine Relativposition in Bezug auf wenigstens ein, an der Umfangswandung (15b) des Verschlusses vorhandenes äußeres Merkmal ist, welches durch an dem Verschluss, insbesondere an der Umfangswandung, vorhandene Struktur gebildet ist.

5. Verfahren nach dem vorangegangenen Anspruch,
**dadurch gekennzeichnet, dass**
das Merkmal bevorzugt ausgewählt ist aus einer Gruppe umfassend Merkmale, welche durch eine Rändelstruktur, mehrere Rändelstrukturen, einen Perforationsbereich insbesondere als Grenze zum Sicherungsring, einen oder mehrere Knicke, eine Rille, mehrere Rillen, eine umlaufende Kante, ein bezüglich der Verschließrichtung (V) kontinuierlich oder diskret rotationssymmetrisch ausgebildetes Merkmal, und dergleichen sowie Kombinationen hiervon gebildet sind.

6. Verfahren nach einem der vorangegangenen Ansprüche,
**dadurch gekennzeichnet, dass**
die Relativposition eine Relativposition in Bezug auf ein in einem Bereich der Mündung des Behältnisses (10) angeordnetes rotationssymmetrisches Element (10a), insbesondere einen Tragring, eine Tragringunterseite, eine Tragringaußenkante, einen Knick zwischen Tragring und einem verstreckbaren und/oder verstreckten Bereich des Behältnisses (10) und/oder eine Begrenzungslinie zwischen einem verstreckten und einem nicht-verstreckten Bereich des Behältnisses ist.

7. Verfahren nach einem der vorangegangenen Ansprüche,
**dadurch gekennzeichnet, dass**
die wenigstens eine Bildaufnahmeeinrichtung die Behältnisse aus einer Richtung aufnimmt, die mit einer senkrecht zu der Längsrichtung (L) des Behältnisses und/oder mit einer senkrecht zu der Verschließrichtung (V) stehenden horizontalen Ebene einen Winkel von höchstens 60°, bevorzugt höchstens 30°, bevorzugt einen Winkel von im Wesentlichen 0° und besonders bevorzugt einen Winkel zwischen 5° - 15° einschließt.

8. Verfahren nach einem der vorangegangenen Ansprüche,
**dadurch gekennzeichnet, dass**
das wenigstens eine ortsaufgelöste Bild, bevorzugt eine Vielzahl ortsaufgelöster Bilder, von wenigstens zwei, bevorzugt wenigstens drei, bevorzugt wenigstens vier, besonders bevorzugt genau zwei oder vier Bildaufnahmeeinrichtungen aufgenommen wird.

9. Verfahren nach einem der vorangegangenen Ansprüche,
**dadurch gekennzeichnet, dass**
die ermittelte Dichtheitsgröße, welche bevorzugt für eine Anordnungstiefe, insbesondere eine Aufschraubtiefe, des Verschlusses in Bezug auf das Behältnis charakteristisch ist, zur Übermittlung an eine Verschließvorrichtung zum Verschließen von Behältnissen mit Verschlüssen bereitgestellt wird.

10. Verfahren zum Betreiben einer Verschließvorrichtung zum Verschließen von Behältnissen (10) mit Verschlüssen (15), wobei die Behältnisse (10) mittels einer Transporteinrichtung (2) entlang eines vorgegebenen Transportpfads transportiert werden, **dadurch gekennzeichnet, dass**
die Verschließvorrichtung wenigstens eine gemäß einem der vorhergehenden Ansprüche ermittelte Dichtheitsgröße erfasst und in Abhängigkeit dieser wenigstens einen Dichtheitsgröße eine Steuerung und/oder eine Regelung des Verschließvorgangs durchführt.

11. Verfahren nach dem vorangegangenen Anspruch,
**dadurch gekennzeichnet, dass**
die Verschließvorrichtung eine Vielzahl von Verschließeinheiten aufweist, wobei jede Verschließeinheit, insbesondere unabhängig von den übrigen Verschließeinheiten, einen Verschließvorgang eigenständig durchführen und hierin einen Verschluss (15) an einem Behältnis (10) anbringen kann, wobei die gemäß einem der vorhergehenden Ansprüche ermittelten Dichtheitsgrößen denjenigen Verschließeinheiten zugeordnet werden, welche den betreffenden Verschließvorgang durchgeführt haben, wobei eine Steuerung und/oder Regelung des Verschließvorgangs der Vielzahl von Verschließeinheiten jeweils in Abhängigkeit der der jeweiligen Verschließeinheit zugeordneten wenigstens einen Dichtheitsgröße erfolgt.

12. Verfahren nach einem der beiden vorangegangenen Ansprüche,
**dadurch gekennzeichnet, dass**
ein aktueller Zustand sowie ein Sollzustand der Verschließvorrichtung und/oder einer der Vielzahl von Verschließeinheiten erfasst wird, und in Abhängigkeit eines Vergleichs des aktuellen Zustands mit dem Sollzustand eine für eine Ausfallwahrscheinlichkeit und/oder einen Wartungsbedarf charakteristische Zustandsgröße ermittelt wird.

13. Verfahren nach einem der drei vorangegangenen Ansprüche,
**dadurch gekennzeichnet, dass**
eine Steuerung und/oder Regelung und/oder Wartung der Verschließvorrichtung in Abhängigkeit eines, insbesondere trainierbaren, Behältnisverschließ-Modells maschinellen Lernens erfolgt, welches einen Satz insbesondere trainierbarer, Parameter umfasst, welche auf Werte eingestellt sind, die als Ergebnis eines Trainingsprozesses gelernt wurden, wobei der Trainingsprozess auf Grundlage eines Satzes von Trainingsdaten erfolgt ist, wobei die Trainingsdaten wenigstens eine für eine in Bezug auf die Verschließrichtung (V) vorliegende Relativposition des Verschlusses (15) gegenüber dem damit versehenen Behältnis (10) charakteristische Anbringgröße, insbesondere eine Aufschraubtiefe, sowie eine für den jeweiligen Verschließvorgang charakteristische Größe umfassen.

14. Inspektionsvorrichtung (1) zum Inspizieren von mit Verschlüssen (15) versehenen Behältnissen (10) zur Überprüfung einer Dichtfunktion zwischen dem Verschluss und einem damit versehenen Behältnis (10), wobei der Verschluss (15) durch Anordnen in Verschließrichtung (V) an einem Mündungsbereich des Behältnisses (10) angeordnet ist, mit einer Transporteinrichtung (2) zum Transportieren der mit Verschlüssen versehenen Behältnisse entlang eines vorgegebenen Transportpfads, mit einer Beleuchtungseinrichtung (6) zur wenigstens bereichsweisen Beleuchtung der mit den Verschlüssen (15) versehenen Behältnisse während dieses Transports und mit wenigstens einer Bildaufnahmeeinrichtung (4) zur Bildaufnahme wenigstens eines ortsaufgelösten Bildes des zu inspizierenden, mit dem Verschluss (10a) versehenen Behältnisses (10),
**dadurch gekennzeichnet, dass**
die Inspektionsvorrichtung zur Überprüfung der Dichtfunktion geeignet, bestimmt und/oder konfiguriert ist, dass von der wenigstens einen Bildaufnahmeeinrichtung (4) das wenigstens eine ortsaufgelöste Bild derart aufgenommen wird, dass hierdurch eine in Verschließrichtung (V) betrachtete Relativposition des Verschlusses (15) gegenüber dem damit versehenen Behältnis (10) abgebildet wird, und eine Bildauswerteeinrichtung auf Grundlage der in dem wenigstens einen ortsaufgelösten Bild abgebildeten Relativposition wenigstens eine für eine Erfüllung der Dichtfunktion charakteristische Dichtheitsgröße ermittelt.

15. Verschließvorrichtung (20) zum Verschließen von Behältnissen (10) mit Verschlüssen (15), wobei die Behältnisse (10) mittels einer Transporteinrichtung (2) entlang eines vorgegebenen Transportpfads transportiert werden,
**dadurch gekennzeichnet, dass**
die Verschließvorrichtung wenigstens eine gemäß einem der vorhergehenden Ansprüche 1-9 ermittelte Dichtheitsgröße erfasst und in Abhängigkeit dieser wenigstens einen Dichtheitsgröße eine Steuerung und/oder eine Regelung des Verschließvorgangs durchführt.
